# EUROPEAN PATENT APPLICATION

(11) **EP 4 753 238 A1**
(43) Date of publication of application: **03.06.2026**
(21) Application number: 24852070.2
(22) Date of filing: 01.07.2024
(51) Int. Cl.: H04L 67/125, H04W 76/14, H04W 76/18, H04W 4/70, G16Y 10/75, G16Y 40/30, H04L 67/75, H04M 1/72448, H04L 12/28

(54) **ELECTRONIC DEVICE FOR CONTROLLING INTERNET OF THINGS DEVICE, AND STORAGE MEDIUM THEREFOR**

(30) Priority: 07.08.2023 KR 20230103074; 08.11.2023 KR 20230153873
(71) Applicant: Samsung Electronics Co., Ltd., Suwon-si, Gyeonggi-do 16677 (KR)
(72) Inventor: BAE, Sunwook, Suwon-si, Gyeonggi-do 16677 (KR); CHO, Bermjin, Suwon-si, Gyeonggi-do 16677 (KR); CHO, Jaeyong, Suwon-si, Gyeonggi-do 16677 (KR)
(74) Representative: Gulde & Partner
(86) International application number: PCT/KR2024/009188
(87) International publication number: WO 2025/033714

(57) **Abstract**

An electronic device for controlling an Internet of Things (IoT) device, and a storage medium therefor are disclosed. The electronic device may comprise: a memory for storing instructions; a communication circuit; a display module; and at least one processor. The instructions can cause the electronic device to: determine, on the basis of receiving a first control instruction for an IoT device through a widget screen, whether the first control instruction for the IoT device instructs an action related to the current state of the IoT device, while displaying, through a display module, a widget screen of a device widget corresponding to the IoT device; and, on the basis that the first control instruction instructs the action related to the current state of the IoT device, transmit, to a server, instruction information related to the first control instruction through the communication circuit so that the server controls the IoT device.

## Description

### [Technical Field]

Embodiments of the disclosure relate to an electronic device for controlling an internet of things (IoT) device, and a storage medium therefor.

### [Background Art]

Various services and additional functions are increasingly provided through electronic devices such as smartphones. To enhance the utility of these electronic devices and satisfy the needs of various users, communication service providers or electronic device manufacturers are competitively developing electronic devices that offer diverse functions. Accordingly, various functions provided through electronic devices are becoming advanced.

With the development of wireless communication technology, devices using artificial intelligence (AI) are widely adopted. For example, home appliances connected to a network using internet of things (IoT) technology may leverage AI. The IoT technology may provide intelligent Internet technology services that create new values in human life by collecting and analyzing data generated from devices. Through the convergence and combination of existing Internet technology and various industries, the IoT technology may be applied to fields such as smart homes, smart buildings, smart cities, smart cars, and smart home appliances.

Homes are equipped with various home appliances for user convenience. Various services have been proposed to make the operation or control of home appliances more convenient by using the IoT technology. Home network technology may provide various services to users within a home through a home network. For example, a user may control various controlled devices (e.g., home appliances to which the IoT technology is applied) that form the home network, using a personal electronic device (e.g., a smartphone). The user may desire to receive even more diverse services for controlling the controlled devices. Consequently, the development of various technologies for managing controlled devices by reflecting a user's intent is requested.

To control a controlled device (e.g., a television (TV), an air conditioner, an air purifier, a washing machine, a security camera, a lighting, or a switch), a user may use an electronic device (e.g., a smartphone or wearable device) owned by the user to execute a procedure (e.g., onboarding) for registering the controlled device to a network (e.g., a cloud server). The electronic device may connect the controlled device to a user account by controlling the controlled device to register to a server. The electronic device may access the server through a client application based on the user account and control the controlled device according to a user input.

### [Detailed Description of the Invention]

### [Technical Solution]

Embodiments of the disclosure may provide an electronic device for controlling an IoT device, and a storage medium therefor.

The technical objects to be achieved by the disclosure are not limited to those mentioned above, and technical objects not mentioned herein will become clearly understandable to those skilled in the art from the following description.

An electronic device according to an embodiment of the disclosure may include memory storing instructions, communication circuitry, a display module, and at least one processor functionally coupled with the memory, the communication circuitry, and the display module. The instructions, when executed by the at least one processor, may cause the electronic device to, based on receiving a first control command for an internet of things (IoT) device through a widget screen of a device widget corresponding to the IoT device, while displaying the widget screen through the display module. The instructions, when executed by the at least one processor, may cause the electronic device to determine whether the first control command indicates an action associated with a current state of the IoT device. The instructions, when executed by the at least one processor, may cause the electronic device to, based on the first control command indicating the action associated with the current state of the IoT device, transmit, through the communication circuitry, command information related to the first control command to a server for the server to control the IoT device. The instructions, when executed by the at least one processor, may cause the electronic device to, based on receiving a second control command for the IoT device through an execution screen of an IoT client application for controlling an IoT network including the IoT device while displaying the execution screen of the IoT client application, convert the second control command to control information associated with a recent state of the IoT device, by using state information representing the recent state of the IoT device stored by the IoT client application. The instructions, when executed by the at least one processor, may cause the electronic device to transmit the control information to the IoT device via a D2D (device-to-device) connection established between the IoT device and the electronic device.

A server according to an embodiment of the disclosure may include communication circuitry, memory storing instructions, and at least one processor functionally coupled with the communication circuitry and the memory. The instructions, when executed by the at least one processor, may cause the server to receive and store state information indicating a current state of an IoT device in the memory. The instructions, when executed by the at least one processor, may cause the server to receive, from an electronic device, command information related to an action intended to be executed by the IoT device through the communication circuitry. The instructions, when executed by the at least one processor, may cause the server to convert the command information to a control command including a new state value to be set in the IoT device, based on the state information. The instructions, when executed by the at least one processor, may cause the server to transmit the control command to the IoT device through the communication circuitry.

In a non-transitory computer-readable storage medium storing at least one program according to an embodiment of the disclosure, the at least one program may include instructions configured to, when executed by at least one processor of an electronic device, cause the electronic device to, based on receiving a first control command for an IoT device through a widget screen of a device widget corresponding to the IoT device, while displaying the widget screen through a display module, determine whether the first control command indicates an action associated with a current state of the IoT device, based on the first control command indicating the action associated with the current state of the IoT device, transmit command information related to the first control command to a server for the server to control the IoT device, based on receiving a second control command for the IoT device through an execution screen of an IoT client application for controlling an IoT network including the IoT device while displaying the execution screen of the IoT client application, convert the second control command to control information associated with a recent state of the IoT device, by using state information representing the recent state of the IoT device stored by the IoT client application, and transmit the control information to the IoT device via a D2Dconnection established between the IoT device and the electronic device.

In a non-transitory computer-readable storage medium storing at least one program according to an embodiment of the disclosure, the at least one program may include instructions configured to, when executed by at least one processor of a server, cause the server to receive and store state information indicating a current state of an IoT device, receive, from an electronic device, command information related to an action intended to be executed by the IoT device, convert the command information to a control command including a new state value to be set in the IoT device, based on the state information, and transmit the control command to the IoT device.

### [Brief Description of Drawings]

FIG. 1 illustrates an internet of things (IoT) system according to various embodiments.
FIG. 2 is a block diagram illustrating an electronic device in a network environment according to various embodiments.
FIG. 3 is a diagram illustrating a network including controlled devices according to an embodiment of the disclosure.
FIG. 4A is a block diagram illustrating the configuration of a second electronic device that performs IoT control according to an embodiment of the disclosure.
FIG. 4B is a block diagram illustrating the configuration of a server that performs IoT control according to an embodiment of the disclosure.
FIGS. 5A, 5B and 5C illustrate examples of a scene widget for an IoT service according to embodiments of the disclosure.
FIGS. 6A, 6B and 6C illustrate examples of scene widgets for an IoT service according to embodiments of the disclosure.
FIG. 7 illustrates another example of a device widget for an IoT service according to an embodiment of the disclosure.
FIG. 8 illustrates an example of a user interface (UI) for editing a scene widget according to an embodiment.
FIG. 9 is a diagram illustrating device control based on a current state according to an embodiment.
FIG. 10 is a diagram illustrating device control based on a recent state stored in a server according to an embodiment.
FIG. 11 is a diagram illustrating a system structure that performs control based on a current state of an IoT device according to an embodiment of the disclosure.
FIG. 12 is a flowchart illustrating fast device control through a device widget according to an embodiment of the disclosure.
FIG. 13 is a flowchart illustrating fast device control by a server according to an embodiment of the disclosure.
FIG. 14 is a diagram illustrating a system structure for transmitting a control command to an IoT device according to an embodiment of the disclosure.
FIG. 15 is a sequence diagram illustrating a signal flow for device control according to an embodiment of the disclosure.
FIG. 16 is a diagram illustrating a flow of adding a device widget to a home screen according to an embodiment of the disclosure.
FIG. 17 illustrates examples of device widgets according to an embodiment of the disclosure.
FIGS. 18A, 18B and 18C illustrate examples of multiple device widgets according to an embodiment of the disclosure.
FIG. 19 is a diagram illustrating a widget UI including state information after device control according to an embodiment of the disclosure.

### [Mode for Carrying out the Invention]

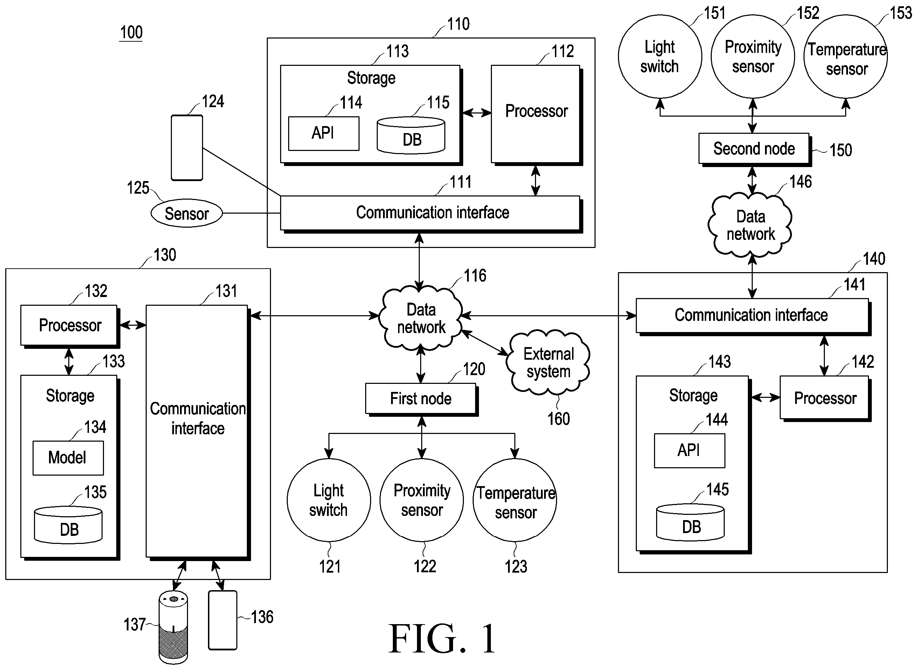

FIG. 1 illustrates an internet of things (IoT) system 100 according to various embodiments. At least some of the components in FIG. 1 may be omitted, and the system may be implemented to further include components that are not shown.

Referring to FIG. 1, the IoT system 100 according to an embodiment includes a plurality of electronic devices connectable to a data network 116 or 146. For example, the IoT system 100 may include at least one of a first IoT server 110, a first node 120, a voice assistant server 130, a second IoT server 140, a second node 150, or devices 121, 122, 123, 124, 125, 136, 137, 151, 152, and 153.

According to an embodiment, the first IoT server 110 may include at least one of a communication interface 111, a processor 112, or a storage 113. The second IoT server 140 may include at least one of a communication interface 141, a processor 142, or a storage 143. In the disclosure, an "IoT server" may remotely control and/or monitor one or more devices (e.g., the devices 121, 122, 123, 124, 125, 151, 152, and 153) through a relay device (e.g., the first node 120 or the second node 150) or directly without a relay device, for example, based on a data network (e.g., the data network 116 or the data network 146). Herein, a "device" refers to a sensor, a home appliance, an office electronic device, or a device for performing a process, which is deployed (or located) within a local environment such as a home, an office, a factory, a building, an external point, or other type of premises, and the type of the device is not limited. A device that receives a control command and performs an operation corresponding to the control command may be referred to as a "target device." The IoT server may also be referred to as a central server in that it selects a target device among a plurality of devices and provides a control command.

According to an embodiment, the first IoT server 110 may communicate with the devices 121, 122, and 123 through the data network 116. The data network 116 may refer to a network for wide-area communication, such as the Internet or a computer network (e.g., LAN or WAN), or may include a cellular network.

According to an embodiment, the first IoT server 110 may be connected to the data network 116 through the communication interface 111. The communication interface 111 may include a communication device (or communication module) to support communication over the data network 116, and may be integrated into a single component (e.g., a single chip) or implemented as a plurality of separate components (e.g., a plurality of chips). The first IoT server 110 may communicate with the devices 121, 122, and 123 through the first node 120. The first node 120 may receive data from the first IoT server 110 through the data network 116 and transmit the received data to at least some of the devices 121, 122, and 123. Alternatively, the first node 120 may receive data from at least some of the devices 121, 122, and 123 and transmit the received data to the first IoT server 110 through the data network 116. The first node 120 may function as a bridge between the data network 116 and the devices 121, 122, and 123. Although FIG. 1 illustrates only one first node 120, this is merely exemplary, and the number of first nodes is not limited.

In the disclosure, a "node" may be an edge computing system or a hub device. According to an embodiment, the first node 120 may support wired and/or wireless communication for the data network 116, and also support wired and/or wireless communication with the devices 121, 122, and 123. For example, the first node 120 may be connected to the devices 121, 122, and 123 through a short-range communication network such as at least one of Bluetooth, Wi-Fi, Wi-Fi direct, Z-wave, Zig-bee, INSETEON, X10, or infrared data association (IrDA), but the type of communication is not limited. The first node 120 may be deployed (or located) within an environment such as a home, an office, a factory, a building, an external point, or other type of premises. Accordingly, the devices 121, 122, and 123 may be monitored and/or controlled by a service provided by the first IoT server 110, and the devices 121, 122, and 123 may not be required to have a full network communication capability (e.g., Internet communication) for a direct connection to the first IoT server 110. Although the devices 121, 122, and 123 are shown as being implemented as electronic devices within a home environment, such as a light switch, a proximity sensor, and a temperature sensor, this is merely exemplary and should not be construed as limiting.

According to an embodiment, the first IoT server 110 may also support direct communication with the devices 124 and 125. Herein, "direct communication" refers to communication that does not pass through a relay device such as the first node 120, and may mean communication through a cellular communication network and/or a data network, for example.

According to an embodiment, the first IoT server 110 may transmit a control command to at least some of the devices 121, 122, 123, 124, and 125. Herein, a "control command" may mean data that causes a controllable device to perform a specific operation, and the specific operation is an action performed by the device, which may include outputting information, sensing information, reporting information, or managing (e.g., deleting or creating) information, and is not limited in type. For example, the processor 112 may obtain information (or a request) for generating a control command from the outside (e.g., the voice assistant server 130, the second IoT server 140, an external system 160, or at least some of the devices 121, 122, 123, 124, and 125), and generate the control command based on the obtained information. Alternatively, the processor 112 may generate a control command, based on the result of monitoring at least some of the devices 121, 122, 123, 124, and 125 satisfying a specified condition. The processor 112 may control the communication interface 111 to transmit the control command to a target device.

According to an embodiment, the processor 112, a processor 132, or a processor 142 may be implemented as a combination of at least one of a general-purpose processor such as a central processing unit (CPU), a digital signal processor (DSP), an application processor (AP), or a communication processor (CP), a graphics-dedicated processor such as a graphical processing unit (GPU) or a vision processing unit (VPU), or an Al-dedicated processor such as an neural processing unit (NPU). Those skilled in the art will understand that the above processing units are merely exemplary, and the processor 112 is not limited so long as it is a computation means capable of executing instructions stored, for example, in the memory 113 and outputting an execution result.

According to an embodiment, the processor 112 may configure a web-based interface based on an API 114 or expose resources managed by the first IoT server 110 to the outside. The web-based interface may, for example, support communication between the first IoT server 110 and an external web service. The processor 112 may, for example, allow the external system 160 to control and/or access the devices 121, 122, and 123. The external system 160 may be an independent system not associated with, or not part of, the system 100. The external system 160 may be, for example, an external server or a website. However, security is required for access to the devices 121, 122, and 123 or the resources of the first IoT server 110 from the external system 160. According to an embodiment, the processor 112 may expose an API endpoint (e.g., a universal resource locator (URL)) based on the API 114 to the outside by an automation application. As described above, the first IoT server 110 may transmit a control command to a target device among the devices 121, 122, and 123. The description of a communication interface 141, the processor 142, a storage 143, an API 144, and a database 145 of the second IoT server 140 may be substantially the same as the description of the communication interface 111, the processor 112, the storage 113, the API 114, and a database 115 of the first IoT server 110. Further, the description of the second node 150 may be substantially the same as the description of the first node 120. The second IoT server 140 may transmit a control command to a target device among the devices 151, 152, and 153. The first IoT server 110 and the second IoT server 140 may be operated by the same service provider in an embodiment, but may be operated by different service providers in another embodiment.

According to an embodiment, the voice assistant server 130 may transmit and receive data to and from the first IoT server 110 through the data network 116. The voice assistant server 130 according to an embodiment may include at least one of a communication interface 131, the processor 132, or a storage 133. The communication interface 131 may communicate with a smartphone 136 or an AI speaker 137 through a data network (not shown) and/or a cellular network (not shown). The smartphone 136 or the AI speaker 137 may include a microphone, obtain a user voice, convert it into a voice signal, and transmit the voice signal to the voice assistant server 130. The processor 132 may receive the voice signal from the smartphone 136 or the AI speaker 137 through the communication interface 131. The processor 132 may process the received voice signal based on a stored model 134. The processor 132 may generate (or identify) a control command using a processing result, based on information stored in a database 135. According to an embodiment, the storages 113, 133, and 143 may include a non-transitory storage medium of at least one of the following types: flash memory type, hard disk type, multimedia card micro type, card-type memory (e.g., SD or XD memory), random access memory (RAM), static random access memory (SRAM), read-only memory (ROM), electrically erasable programmable read-only memory (EEPROM), programmable read-only memory (PROM), magnetic memory, magnetic disk, or optical disk, and are not limited in type.

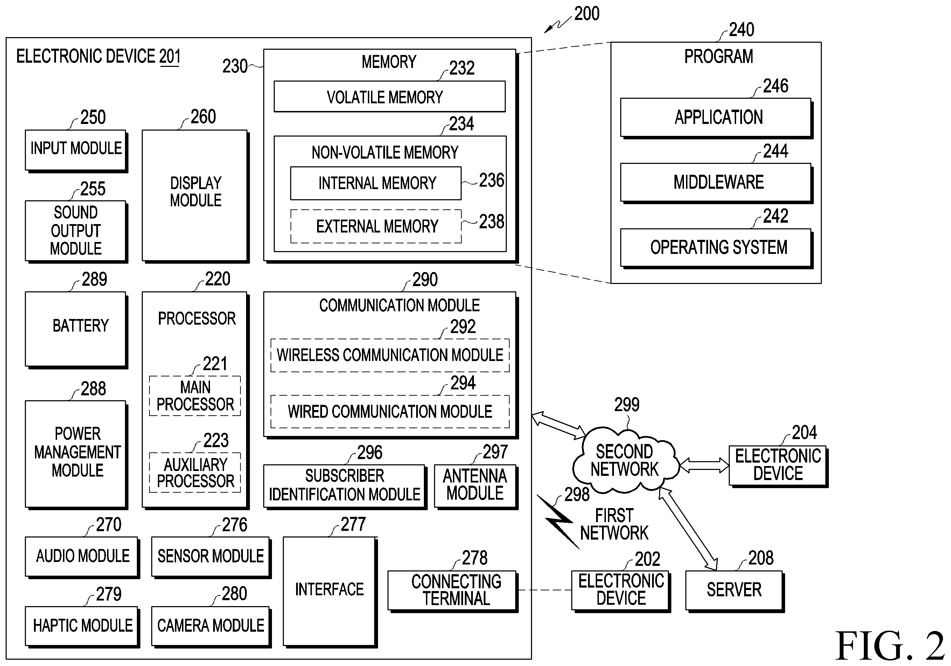

In various embodiments, at least one device (e.g., the device 124) communicating with the first IoT server 110 may be a smartphone (e.g., an electronic device 201 in FIG. 2) within a network environment.

FIG. 2 is a block diagram illustrating an electronic device 201 in a network environment 200 according to various embodiments.

Referring to FIG. 2, the electronic device 201 in the network environment 200 may communicate with an electronic device 202 via a first network 298 (e.g., a short-range wireless communication network), or at least one of an electronic device 204 or a server 208 via a second network 299 (e.g., a long-range wireless communication network). According to an embodiment, the electronic device 201 may communicate with the electronic device 204 via the server 208. According to an embodiment, the electronic device 201 may include a processor 220, memory 230, an input module 250, a sound output module 255, a display module 260, an audio module 270, a sensor module 276, an interface 277, a connecting terminal 278, a haptic module 279, a camera module 280, a power management module 288, a battery 289, a communication module 290, a subscriber identification module(SIM) 296, or an antenna module 297. In some embodiments, at least one of the components (e.g., the connecting terminal 278) may be omitted from the electronic device 201, or one or more other components may be added in the electronic device 201. In some embodiments, some of the components (e.g., the sensor module 276, the camera module 280, or the antenna module 297) may be implemented as a single component (e.g., the display module 260).

The processor 220 may execute, for example, software (e.g., a program 240) to control at least one other component (e.g., a hardware or software component) of the electronic device 201 coupled with the processor 220, and may perform various data processing or computation. According to one embodiment, as at least part of the data processing or computation, the processor 220 may store a command or data received from another component (e.g., the sensor module 276 or the communication module 290) in volatile memory 232, process the command or the data stored in the volatile memory 232, and store resulting data in non-volatile memory 234. According to an embodiment, the processor 220 may include a main processor 221 (e.g., a central processing unit (CPU) or an application processor (AP)), or an auxiliary processor 223 (e.g., a graphics processing unit (GPU), a neural processing unit (NPU), an image signal processor (ISP), a sensor hub processor, or a communication processor (CP)) that is operable independently from, or in conjunction with, the main processor 221. For example, when the electronic device 201 includes the main processor 221 and the auxiliary processor 223, the auxiliary processor 223 may be adapted to consume less power than the main processor 221, or to be specific to a specified function. The auxiliary processor 223 may be implemented as separate from, or as part of the main processor 221.

The auxiliary processor 223 may control at least some of functions or states related to at least one component (e.g., the display module 260, the sensor module 276, or the communication module 290) among the components of the electronic device 201, instead of the main processor 221 while the main processor 221 is in an inactive (e.g., sleep) state, or together with the main processor 221 while the main processor 221 is in an active state (e.g., executing an application). According to an embodiment, the auxiliary processor 223 (e.g., an image signal processor or a communication processor) may be implemented as part of another component (e.g., the camera module 280 or the communication module 290) functionally related to the auxiliary processor 223. According to an embodiment, the auxiliary processor 223 (e.g., the neural processing unit) may include a hardware structure specified for artificial intelligence model processing. An artificial intelligence model may be generated by machine learning. Such learning may be performed, e.g., by the electronic device 201 where the artificial intelligence is performed or via a separate server (e.g., the server 208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 230 may store various data used by at least one component (e.g., the processor 220 or the sensor module 276) of the electronic device 201. The various data may include, for example, software (e.g., the program 240) and input data or output data for a command related thereto. The memory 230 may include the volatile memory 232 or the non-volatile memory 234.

The program 240 may be stored in the memory 230 as software, and may include, for example, an operating system (OS) 242, middleware 244, or an application 246.

The input module 250 may receive a command or data to be used by another component (e.g., the processor 220) of the electronic device 201, from the outside (e.g., a user) of the electronic device 201. The input module 250 may include, for example, a microphone, a mouse, a keyboard, a key (e.g., a button), or a digital pen (e.g., a stylus pen).

The sound output module 255 may output sound signals to the outside of the electronic device 201. The sound output module 255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 260 may visually provide information to the outside (e.g., a user) of the electronic device 201. The display module 260 may include, for example, a display, a hologram device, or a projector and control circuitry to control a corresponding one of the display, hologram device, and projector. According to an embodiment, the display module 260 may include a touch sensor adapted to detect a touch, or a pressure sensor adapted to measure the intensity of force incurred by the touch.

The audio module 270 may convert a sound into an electrical signal and vice versa. According to an embodiment, the audio module 270 may obtain the sound via the input module 250, or output the sound via the sound output module 255 or a headphone of an external electronic device (e.g., an electronic device 202) directly (e.g., wiredly) or wirelessly coupled with the electronic device 201.

The sensor module 276 may detect an operational state (e.g., power or temperature) of the electronic device 201 or an environmental state (e.g., a state of a user) external to the electronic device 201, and then generate an electrical signal or data value corresponding to the detected state. According to an embodiment, the sensor module 276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 277 may support one or more specified protocols to be used for the electronic device 201 to be coupled with the external electronic device (e.g., the electronic device 202) directly (e.g., wiredly) or wirelessly. According to an embodiment, the interface 277 may include, for example, a high definition multimedia interface (HDMI), a universal serial bus (USB) interface, a secure digital (SD) card interface, or an audio interface.

A connecting terminal 278 may include a connector via which the electronic device 201 may be physically connected with the external electronic device (e.g., the electronic device 202). According to an embodiment, the connecting terminal 278 may include, for example, a HDMI connector, a USB connector, a SD card connector, or an audio connector (e.g., a headphone connector).

The haptic module 279 may convert an electrical signal into a mechanical stimulus (e.g., a vibration or a movement) or electrical stimulus which may be recognized by a user via his tactile sensation or kinesthetic sensation. According to an embodiment, the haptic module 279 may include, for example, a motor, a piezoelectric element, or an electric stimulator.

The camera module 280 may capture a still image or moving images. According to an embodiment, the camera module 280 may include one or more lenses, image sensors, image signal processors, or flashes.

The power management module 288 may manage power supplied to the electronic device 201. According to one embodiment, the power management module 288 may be implemented as at least part of, for example, a power management integrated circuit (PMIC).

The battery 289 may supply power to at least one component of the electronic device 201. According to an embodiment, the battery 289 may include, for example, a primary cell which is not rechargeable, a secondary cell which is rechargeable, or a fuel cell.

The communication module 290 may support establishing a direct (e.g., wired) communication channel or a wireless communication channel between the electronic device 201 and the external electronic device (e.g., the electronic device 202, the electronic device 204, or the server 208) and performing communication via the established communication channel. The communication module 290 may include one or more communication processors that are operable independently from the processor 220 (e.g., the application processor (AP)) and supports a direct (e.g., wired) communication or a wireless communication. According to an embodiment, the communication module 290 may include a wireless communication module 292 (e.g., a cellular communication module, a short-range wireless communication module, or a global navigation satellite system (GNSS) communication module) or a wired communication module 294 (e.g., a local area network (LAN) communication module or a power line communication (PLC) module). A corresponding one of these communication modules may communicate with the external electronic device via the first network 298 (e.g., a short-range communication network, such as Bluetooth^{™}, wireless-fidelity (Wi-Fi) direct, or infrared data association (IrDA)) or the second network 299 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 292 may identify and authenticate the electronic device 201 in a communication network, such as the first network 298 or the second network 299, using subscriber information (e.g., international mobile subscriber identity (IMSI)) stored in the subscriber identification module 296.

The wireless communication module 292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 292 may support a high-frequency band (e.g., the mmWave band) to achieve, e.g., a high data transmission rate. The wireless communication module 292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 292 may support various requirements specified in the electronic device 201, an external electronic device (e.g., the electronic device 204), or a network system (e.g., the second network 299). According to an embodiment, the wireless communication module 292 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 297 may transmit or receive a signal or power to or from the outside (e.g., the external electronic device) of the electronic device 201. According to an embodiment, the antenna module 297 may include an antenna including a radiating element composed of a conductive material or a conductive pattern formed in or on a substrate (e.g., a printed circuit board (PCB)). According to an embodiment, the antenna module 297 may include a plurality of antennas (e.g., array antennas). In such a case, at least one antenna appropriate for a communication scheme used in the communication network, such as the first network 298 or the second network 299, may be selected, for example, by the communication module 290 (e.g., the wireless communication module 292) from the plurality of antennas. The signal or the power may then be transmitted or received between the communication module 290 and the external electronic device via the selected at least one antenna. According to an embodiment, another component (e.g., a radio frequency integrated circuit (RFIC)) other than the radiating element may be additionally formed as part of the antenna module 297.

According to various embodiments, the antenna module 297 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 201 and the external electronic device 204 via the server 208 coupled with the second network 299. Each of the electronic devices 202 or 204 may be a device of a same type as, or a different type, from the electronic device 201. According to an embodiment, all or some of operations to be executed at the electronic device 201 may be executed at one or more of the external electronic devices 202, 204, or 208. For example, if the electronic device 201 should perform a function or a service automatically, or in response to a request from a user or another device, the electronic device 201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 201. The electronic device 201 may provide the outcome, with or without further processing of the outcome, as at least part of a reply to the request. To that end, a cloud computing, distributed computing, mobile edge computing (MEC), or client-server computing technology may be used, for example. The electronic device 201 may provide ultra low-latency services using, e.g., distributed computing or mobile edge computing. In another embodiment, the external electronic device 204 may include an internet-of-things (IoT) device. The server 208 may be an intelligent server using machine learning and/or a neural network. According to an embodiment, the external electronic device 204 or the server 208 may be included in the second network 299. The electronic device 201 may be applied to intelligent services (e.g., smart home, smart city, smart car, or healthcare) based on 5G communication technology or IoT-related technology.

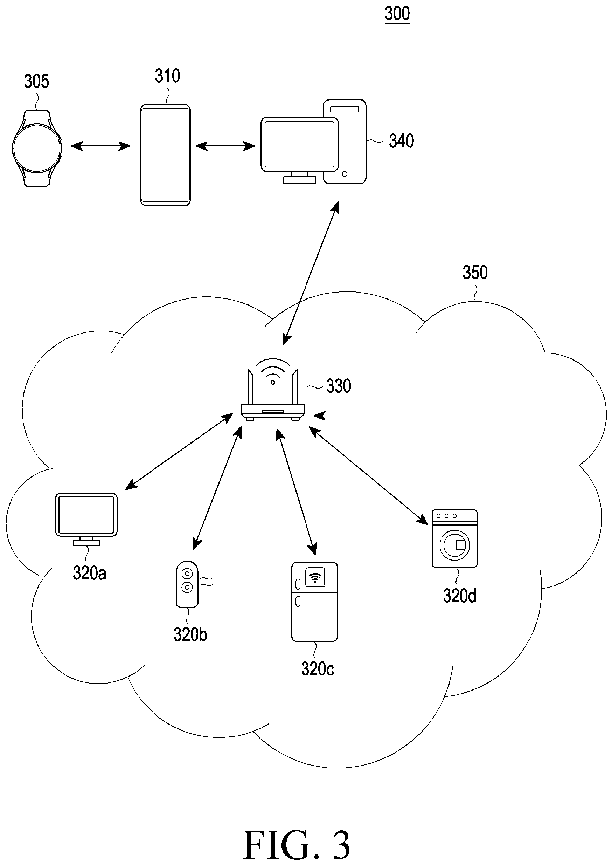

FIG. 3 is a diagram illustrating a network including controlled devices according to an embodiment of the disclosure.

Referring to FIG. 3, a network 300 (e.g., an IoT network) may include a server 340 operating as an IoT cloud, a first electronic device 310 (e.g., the electronic device 201) capable of communicating with the server 340 via wide-area wireless communication (e.g., the second network 299), and one or more controlled devices (e.g., IoT devices 320a, 320b, 320c, and 320d) within a local network 350, which support IoT technology and are capable of communicating with the server 340 via short-range wireless communication (e.g., Bluetooth or Wi-Fi). In an embodiment, a hub device (not shown) (e.g., a smartphone, a tablet, a home automation panel, a personal computer (PC), or a TV) configured to manage the connections and states of the IoT devices 320a, 320b, 320c, and 320d may be further included in the local network 350. The first electronic device 310 may communicate with the IoT devices 320a, 320b, 320c, and 320d via the server 340, through wide-area wireless communication (e.g., the second network 299), or through short-range wireless communication (e.g., the first network 298).

The IoT devices 320a, 320b, 320c, and 320d may be controlled (e.g., report a state and/or execute a designated action) by a remote command (e.g., a control command from the first electronic device 310), and include at least one of, for example, a TV, an air conditioner, an air purifier, a refrigerator, a washing machine, a bulb, a security camera, a sensor, or a window treatment. The controlled devices 320a, 320b, 320c, and 320d may communicate with the first electronic device 310 through the hub device (not shown) or an AP 330 within the local network 350, communicate with the first electronic device 310 through the server 340, and/or communicate directly with the first electronic device 310 (e.g., without going through the server 340, the AP 330, or the hub device). In an embodiment, the IoT devices 320a, 320b, 320c, and 320d may be configured to communicate with the first electronic device 310 through wide-area wireless communication (e.g., the second network 299) or short-range wireless communication (e.g., the first network 298). In an embodiment, the IoT devices 320a, 320b, 320c, and 320d may be configured to communicate with the server 340 through wide-area wireless communication (e.g., the second network 299) or short-range wireless communication (e.g., the first network 298).

In an embodiment, the first electronic device 310 may be a personal electronic device such as a smartphone or a tablet, or an electronic device with a display and a user interface, such as a TV or a control console. In an embodiment, the first electronic device 310 may be connected to (e.g., paired with) at least one external electronic device (e.g., a second electronic device 305). The second electronic device 305 may be configured to execute at least some of the functions of the first electronic device 310 described below, either directly or through the first electronic device 310. In an embodiment, the second electronic device 305 may be a wearable device that shares at least some functions of the first electronic device 310.

In an embodiment, the first electronic device 310 may discover at least one (e.g., the IoT device 320a) of the IoT devices 320a, 320b, 320c, and 320d and perform a registration procedure (e.g., onboarding) to register the discovered IoT device 320a to the server 340. The IoT devices 320a, 320b, 320c, and 320d may be registered to the server 340 to be associated with a user account. The second electronic device 305 may acquire control authority over the IoT devices 320a, 320b, 320c, and 320d through the first electronic device 310. The first electronic device 310 and/or the second electronic device 305 may monitor and control the IoT devices 320a, 320b, 320c, and 320d registered to the server 340, based on the user account.

The first electronic device 310 and/or the second electronic device 305 may identify the states of the IoT devices 320a, 320b, 320c, and 320d that the user will use for an IoT service, or control the IoT devices 320a, 320b, 320c, and 320d (e.g., transmit a control command instructing a specific action to be executed). The first electronic device 310 may be an owner device of the local network 350. At least one member device (e.g., the second electronic device 305) including at least some capabilities and/or control authority of the first electronic device 310 may be included in the network 300. In an embodiment, the member device may not be able to perform the registration procedure for the IoT devices 320a, 320b, 320c, and 320d, but may execute a function of identifying the states of or controlling the IoT devices 320a, 320b, 320c, and 320d registered to the server 340.

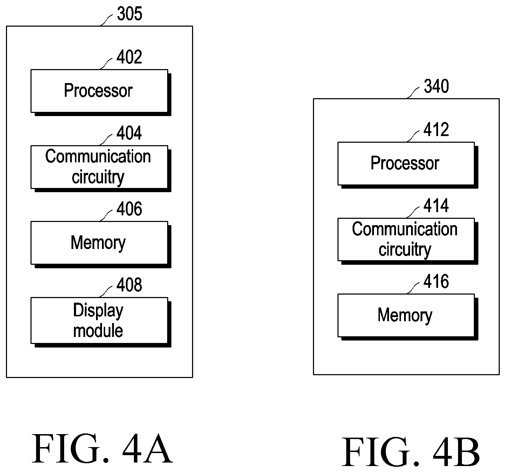

FIG. 4A is a block diagram illustrating the configuration of the second electronic device 305 that performs IoT control according to an embodiment of the disclosure.

Referring to FIG. 4A, the second electronic device 305 may be a device that implements an IoT service (e.g., an event-based IoT service) in the network 300 (e.g., an IoT network). For example, the IoT network may be a smart home network, and the IoT service may be an automation service. The second electronic device 305 may include a processor 402, communication circuitry 404, memory 406, and/or a display module 408. At least some of the components of the second electronic device 305 may be similar to the components of FIG. 2.

The second electronic device 305 may include the communication circuitry 404 (e.g., the communication module 290 of FIG. 2) which transmits and receives signals to and from an external electronic device (e.g., the device 124 in FIG. 1, the electronic device 201 in FIG. 2, or the first electronic device 310, the server 340, the AP 330, or at least one of the IoT devices 320a, 320b, 320c, and 320d in FIG. 3), using one or more antennas (not shown). In an embodiment, the one or more antennas may be implemented as part of the antenna module 297 of FIG. 2. Through the communication circuitry 404, the second electronic device 305 may support at least one of long term evolution (LTE), 5G/new radio (NR), Zigbee, Z-Wave, ultra wide-band (UWB), WiFi, or Bluetooth (e.g., Bluetooth legacy (BT)) and/or Bluetooth low energy (BLE)). The communication circuitry 404 may include one or multiple communication circuits based on LTE, 5G/NR, Zigbee, Z-Wave, UWB, Wi-Fi, BT, and/or BLE.

The second electronic device 305 may include the display module 408 (e.g., the interface 277, the input module 250, the display module 260, and/or the audio module 270 of FIG. 2) for interfacing with the user. Through the display module 408, the second electronic device 305 may display information related to the IoT service (e.g., the states of the IoT devices 320a, 320b, 320c, and 320d and/or control objects of the IoT devices 320a, 320b, 320c, and 320d), and/or receive a user input related to the IoT service (e.g., a command to control the IoT devices 320a, 320b, 320c, and 320d). In an embodiment, the second electronic device 305 may receive the user input through the display module 408 or receive a voice user input through an audio module (not shown).

The second electronic device 305 may include the processor 402 (e.g., the processor 220 of FIG. 2), which may be implemented as one or more single-core processors or one or more multi-core processors, and the memory 406 (e.g., the memory 230 of FIG. 2) which stores instructions and data for the operation of the second electronic device 305. The memory 406 may store applications (e.g., widgets) for executing the IoT service, user information, device information, connection information, or related data.

The processor 402 may manage the states and operations of controlled devices (e.g., the IoT devices 320a, 320b, 320c, and 320d) related to the IoT service, and transmit a control command for at least one controlled device based on a user input, to the at least one controlled device directly by the communication circuitry 404 or through the server 340.

At least one of the IoT devices 320a, 320b, 320c, and 320d registered to the server 340 may periodically or aperiodically report its state information to the server 340, the first electronic device 310, and/or the second electronic device 305. The first electronic device 310 and/or the second electronic device 305 may output (e.g., display) the state information of the at least one IoT device through the display module 408.

FIG. 4B is a block diagram illustrating the configuration of the server 340 that performs IoT control according to an embodiment of the disclosure.

Referring to FIG. 4B, the server 340 may be a device that manages an IoT service (e.g., an event-based IoT service) in the network 300 (e.g., an IoT network). For example, the IoT network may be a smart home network, and the IoT service may be an automation service. The server 340 may be located within the network 300 or in an external network (e.g., the Internet). The server 340 may include a processor 412, communication circuitry 414, and/or memory 416.

The server 340 may include the communication circuitry 414 communicating with at least one of the first electronic device 310, the second electronic device 305, the AP 330, and/or the IoT devices 320a, 320b, 320c, and 320d over a network (e.g., the Internet).

The server 340 may include the processor 412 (e.g., the processor 220 of FIG. 2), which may be implemented as one or more single-core processors or one or more multi-core processors, and the memory 416 (e.g., the memory 230 of FIG. 2) which stores instructions and data for the operation of the server 340.

The memory 416 may store user information, device information, connection information, or related data for managing the IoT service. In an embodiment, the memory 416 may store a mapping table (e.g., a mapping table 1410) that maps executable actions, device capabilities, and current states of the controlled devices (e.g., the IoT devices 320a, 320b, 320c, and 320d) related to the IoT service.

The processor 412 may manage the states and operations of the controlled devices (e.g., the IoT devices 320a, 320b, 320c, and 320d) related to the IoT service. The processor 412 may receive command information related to control of at least one (e.g., IoT device 320a) of the controlled devices from the first electronic device 310 and/or the second electronic device 305, and transmit a control command generated based on the command information to the at least one controlled device through the communication circuitry 414. The control command may be transmitted to the controlled device through the AP 330. The command information may indicate an action intended to be executed by the IoT device 320a, as indicated by the user input.

In an embodiment, the first electronic device 310 and/or the second electronic device 305 may be configured to execute a device widget for the IoT service. In an embodiment, a device widget may be a small-sized application that executes designated actions of the IoT devices 320a, 320b, 320c, and 320d and displays information related to the states of the IoT devices 320a, 320b, 320c, and 320d. The first electronic device 310 and/or the second electronic device 305 may display an object (e.g., an icon image) of the device widget through a home screen or a designated scene widget, and the user may quickly execute a control command related to the IoT devices 320a, 320b, 320c, and 320d through the object of the device widget without executing an IoT client application. In an embodiment, the device widget may include one or more scene widgets. A single scene widget may include one or more control objects for one or more IoT devices 320a, 320b, 320c, and 320d corresponding to a designated scene.

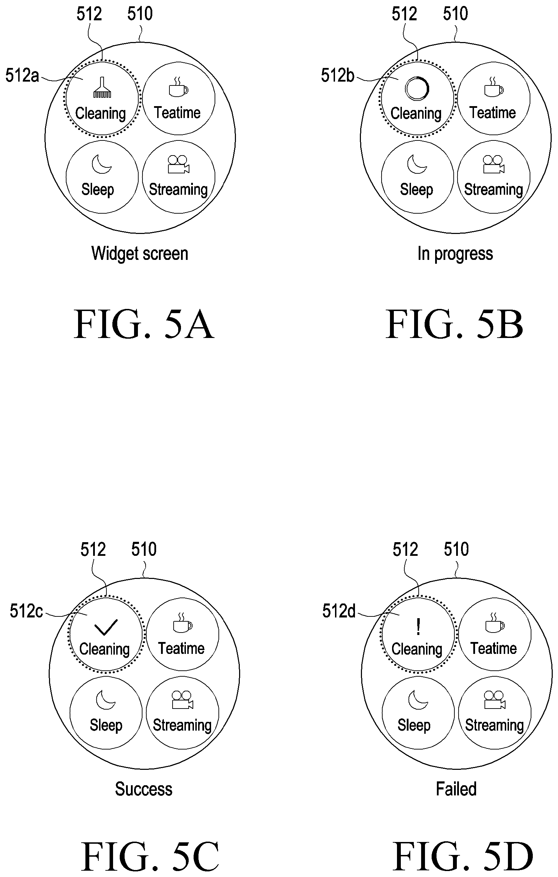

FIGS. 5A, 5B, 5C, and 5D illustrate examples of a scene widget for an IoT service according to embodiments of the disclosure.

Referring to FIG. 5A, the second electronic device 305 may display a widget screen 510 of a scene widget, for example, through the display module 408. The widget screen 510 of the scene widget may include at least one of a cleaning object 512, a teatime object, a sleep object, or a streaming object. Each object may cause the second electronic device 305 to execute at least one control command for at least one designated IoT device. In an embodiment, the widget screen 510 of the scene widget may be displayed on a home widget or designated scene of the second electronic device 305, and used to quickly execute pre-designated control command(s), compared to using an IoT client application. In an embodiment, the cleaning object 512 may include an image 512a representing a normal state, when it is first executed.

In an embodiment, the second electronic device 305 may receive a user input (e.g., a touch) on the cleaning object 512, and transmit a control command to at least one IoT device (e.g., a robot vacuum cleaner) corresponding to the cleaning object 512 to execute an action that operates the robot vacuum cleaner.

Referring to FIG. 5B, while the control command is transmitted to the robot vacuum cleaner and the robot vacuum cleaner is performing cleaning, the second electronic device 305 may display an image 512b (e.g., a moving circle) indicating the current state (e.g., cleaning in progress) of the robot vacuum cleaner through the cleaning object 512.

Referring to FIG. 5C, when the robot vacuum cleaner completes cleaning and the second electronic device 305 receives an execution result of the robot vacuum cleaner, the second electronic device 305 may display an image 512c (e.g., a check mark) indicating the current state (e.g., cleaning completed) of the robot vacuum cleaner through the cleaning object 512.

Referring to FIG. 5D, when the second electronic device 305 receives a result indicating that the robot vacuum cleaner has failed to properly perform the control command, or when connection to the robot vacuum cleaner is not possible, the second electronic device 305 may display an image 512d (e.g., an exclamation mark) indicating the current state (e.g., an abnormal situation) through the cleaning object 512.

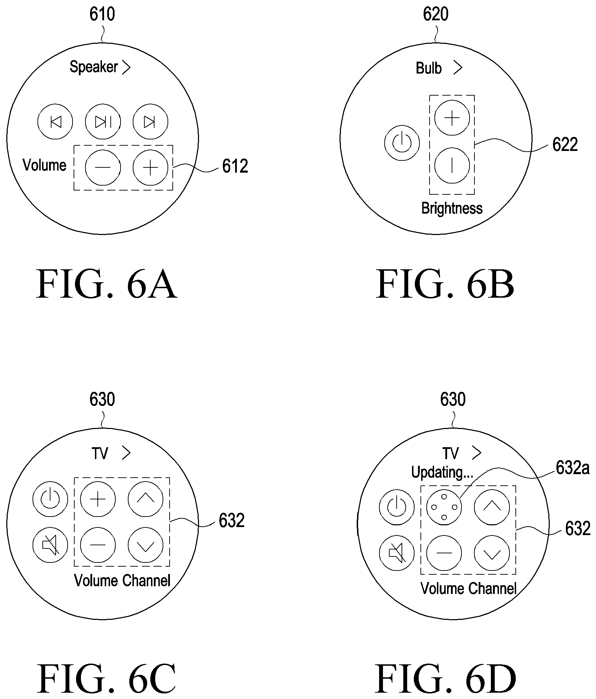

FIGS. 6A, 6B, 6C, and 6D illustrate examples of device widgets for an IoT service according to embodiments of the disclosure.

Referring to FIG. 6A, when a speaker device widget corresponding to a speaker, which is one of the IoT devices, is executed, the second electronic device 305 may display a widget screen 610 of the speaker device widget. In an embodiment, the widget screen 610 may include one or more objects capable of controlling the speaker, such as at least one of a previous object, a play/pause object, a next object, or volume control objects 612. In an embodiment, the volume control objects 612 may include a volume up object and a volume down object.

Referring to FIG. 6B, when a lighting device widget corresponding to a bulb, which is one of the IoT devices, is executed, the second electronic device 305 may display a widget screen 620 of the lighting device widget. In an embodiment, the widget screen 620 may include one or more objects capable of controlling the bulb, such as at least one of an on/off object or brightness control objects 622. In an embodiment, the brightness control objects 622 may include a brightness up object and a brightness down object.

Referring to FIG. 6C, when a TV device widget corresponding to a TV, which is one of the IoT devices, is executed, the second electronic device 305 may display a widget screen 630 of the TV device widget. In an embodiment, the widget screen 630 may include one or more objects capable of controlling the TV, such as at least one of an on/off object, a mute object, or volume/channel control objects 632. In an embodiment, the volume/channel control objects 632 may include a volume up object, a volume down object, a channel up object, and a channel down object.

Referring to FIG. 6D, when the second electronic device 305 receives a user input (e.g., a touch) on the volume up object, it may transmit a control command for volume up to the TV through the communication circuitry 404. After transmitting the control command, the second electronic device 305 may display an image and/or text (e.g., "Updating") indicating progressing through the volume up object until an execution result is received from the TV.

In an embodiment, the widget screen 630 of the TV device widget may be displayed on the home widget or a designated scene of the second electronic device 305, and the second electronic device 305 may display the widget screen 630 without a connection to the TV for quick execution. Due to this, when a user input is received on the volume up object, the second electronic device 305 may not know the current state (e.g., a current volume level) of the TV. In an embodiment, the TV may be configured to receive a volume control command including a specific value (e.g., an integer value within a designated range), and consequently, the TV may not be able to properly perform the volume up or volume down control command transmitted by the second electronic device 305.

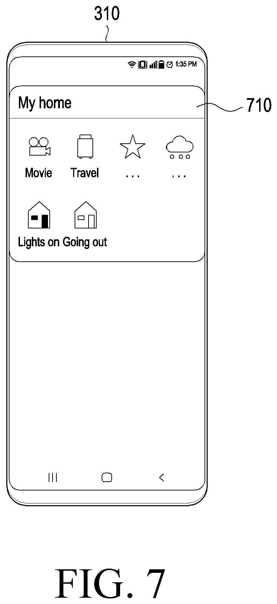

FIG. 7 illustrates another example of a device widget for an IoT service according to an embodiment of the disclosure.

Referring to FIG. 7, when a designated scene widget is executed, the first electronic device 310 may display a widget screen 710 of the scene widget. In an embodiment, the widget screen 710 may include one or more objects corresponding to a designated scene, such as at least one of a movie object, a travel object, a lights-on object, or a going-out object. Each object may cause the first electronic device 310 to execute at least one control command for at least one designated IoT device.

In an embodiment, the widget screen 710 of the scene widget may be displayed on the home widget or a designated scene of the first electronic device 310 and used to quickly execute pre-designated control command(s), compared to using an IoT client application. In an embodiment, each object may include an image representing a normal state, when first executed.

In an embodiment, the first electronic device 310 may provide a device widget for each IoT device or may enable a user to input a designated at least one control command for a designated at least one IoT device through a scene widget that is pre-designated by the user (e.g., a device widget corresponding to the widget screen 710 of FIG. 7). The first electronic device 310 may generate a device widget for actions designated by the user through a designated automation menu.

In an embodiment, the second electronic device 305 may execute a designated scene widget (e.g., the scene widget corresponding to the widget screen 510 in FIG. 5A) or a designated device widget (e.g., the device widget corresponding to the widget screen 610 in FIG. 6A). When the second electronic device 305 has constraints of a limited battery and display screen (e.g., when it is a wearable device), the scene widget or device widget executed on the second electronic device 305 may provide designated objects, but may not be able to provide the current state or operational results of an IoT device designated by the user.

In an embodiment, when an IoT client application is executed, the first electronic device 310 may obtain a recent state (e.g., a current operation mode, and/or a current set temperature) of at least one registered IoT device from the server 340 by the IoT client application, and transmit a control command (e.g., a set temperature value) corresponding to the obtained recent state to the IoT device according to a user input. The first electronic device 310 may periodically or aperiodically receive updated state information from the server 340 through the execution of the IoT client application. However, for example, in the case of a scene widget provided on the home screen, it may be difficult for the first electronic device 310 to identify the current state (e.g., the recent state) of at least one IoT device corresponding to the scene widget in real time due to issues of current consumption caused by state updates.

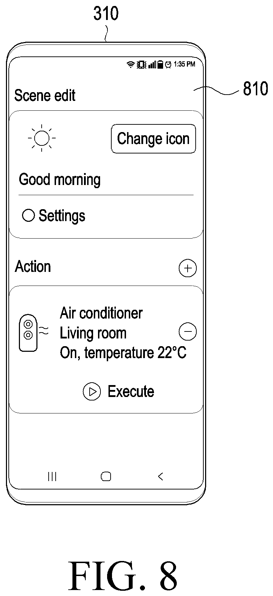

FIG. 8 illustrates an example of a user interface for editing a scene widget according to an embodiment.

Referring to FIG. 8, the first electronic device 310 may register a device widget on the home screen, for easier and faster device control. The first electronic device 310 may display a scene editing interface 810 by the IoT client application, and create or edit a scene widget including at least one IoT device (e.g., an air conditioner) to be controlled and an action to be executed (e.g., power-on and temperature 22°C.) through the scene editing interface 810. However, a scene widget including pre-designated actions may not reflect the current state of the IoT device at a time when the user desires to control, and thus the IoT device may not be able to properly perform a designated action.

The embodiments described below may enable the user to quickly control IoT devices through a home screen or a designated scene on the first electronic device 310 or the second electronic device 305 without performance degradation. The first electronic device 310 and/or the second electronic device 305 may display a widget screen of a device widget on the home screen or the designated scene.

In an embodiment, when a control command not related to the current state of an IoT device is input through the device widget on the home screen or the designated scene, the first electronic device 310 and/or the second electronic device 305 may transmit the control command directly to the IoT device (e.g., without the control of the server) and display an execution result of the control command in the form of, for example, a toast popup.

In an embodiment, when a control command related to the current state of the IoT device is input through the device widget on the home screen or the designated scene, the first electronic device 310 and/or the second electronic device 305 may transmit command information related to the control command to the server 340, instead of transmitting the control command to the IoT device. The server 340 may store a mapping table (e.g., the mapping table 1410) which stores the current state and device capabilities of the IoT device, and convert the command information into a control command corresponding to the current state of the IoT device, based on the current state in the mapping table. The server 340 may transmit the control command to the IoT device over a network (e.g., the Internet).

In an embodiment, the first electronic device 310 and/or the second electronic device 305 may control the IoT device quickly and easily during control through the device widget without requesting and receiving or updating the current state of the IoT device. In an embodiment, after the IoT device is registered, the server 340 may continuously monitor the current state of the IoT device, periodically or aperiodically collect the current state of the IoT device, and store the current state in the mapping table. The server 340 may maintain the current state in the mapping table as a recent value.

In an embodiment, after transmitting the command information to the server 340, the first electronic device 310 and/or the second electronic device 305 may receive an execution result from the IoT device either directly from the IoT device or through the server 340. The first electronic device 310 and/or the second electronic device 305 may display the execution result through, for example, a toast popup.

In an embodiment, when the IoT device is registered, the server 340 may store capability information (e.g., device-to-device (D2D) information related to whether BT, BLE, or UWB is supported) of the IoT device in the mapping table.

In an embodiment, the first electronic device 310 and/or the second electronic device 305 may check a D2D connection of the IoT device to be controlled, and when a D2D connection is established with the IoT device, it may rapidly transmit a control command to the IoT device. In an embodiment, when a D2D connection is not established with the IoT device to be controlled or when the D2D connection fails, the first electronic device 310 and/or the second electronic device 305 may transmit command information related to the control command to the server 340.

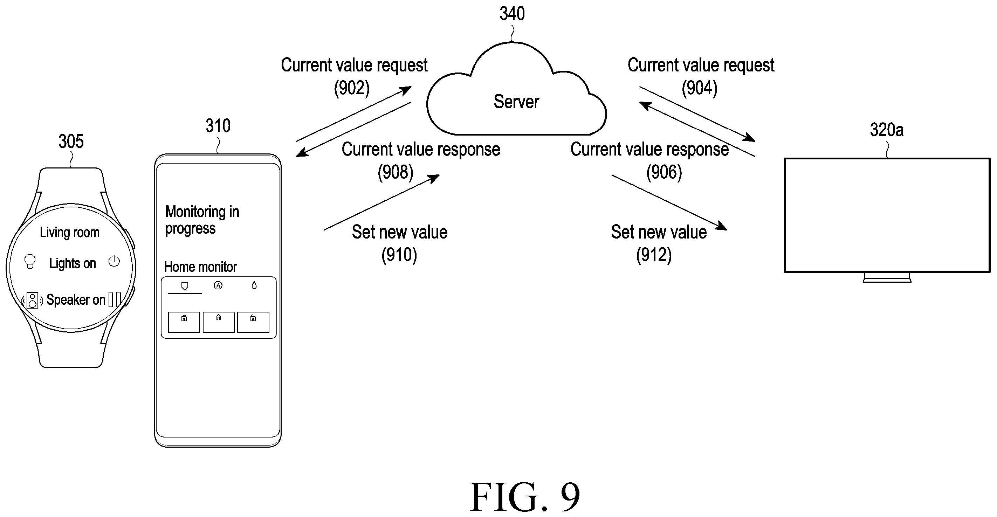

FIG. 9 is a diagram illustrating device control based on a current state according to an embodiment.

Referring to FIG. 9, the first electronic device 310 and/or the second electronic device 305 may control an IoT device (e.g., the IoT device 320a) through the server 340, or directly control the IoT device 320a via a D2D connection (not shown) (e.g., a BT/BLE connection or a Wi-Fi connection). In an embodiment, the IoT device 320a may be configured to operate according to a control command based on its current state. To control the IoT device 320a, the first electronic device 310 and/or the second electronic device 305 may first collect the current state (e.g., current volume and/or current channel) of the IoT device 320a (e.g., a TV).

In operation 902, the first electronic device 310 and/or the second electronic device 305 may request a current value corresponding to the current state (e.g., current volume and/or current channel) of the IoT device 320a from the server 340. In an embodiment, based on receiving a user input selecting a designated action through a device widget or scene widget, the first electronic device 310 and/or the second electronic device 305 may request the current value to execute a control command corresponding to the user input. Although not shown, when the server 340 knows recent state information (e.g., a current state collected within a designated time) of the IoT device 320a, it may transmit state information indicating the current value to the first electronic device 310 and/or the second electronic device 305.

When the server 340 does not know the recent state information of the IoT device 320a, the server 340 may request the current value corresponding to the current state from the IoT device 320a in operation 904. In operation 906, state information indicating the current value may be received from the IoT device 320a. In operation 908, the server 340 may transmit the state information to the first electronic device 310 and/or the second electronic device 305.

In operation 910, the first electronic device 310 and/or the second electronic device 305 may generate a control command corresponding to the user input and transmit the control command to the server 340, based on the current value of the IoT device 320a indicated by the state information. The control command may include a new value to be set for the IoT device 320a based on the user input. In operation 912, the server 340 may transmit the control command to the IoT device 320a. Although not shown, the IoT device 320a may execute an action (e.g., setting the new value) corresponding to the control command and report an execution result to the first electronic device 310 and/or the second electronic device 305 through the server 340 or directly.

To control the IoT device 320a based on a user input through a device widget and/or a scene widget, the first electronic device 310 and/or the second electronic device 305 should first obtain state information about the current state of the IoT device 320a through the server 340, as in the aforementioned operations 902, 904, 906, and 908, and then transmit a control command including a new value to be set to the IoT device 320a, as in operations 910 and 912. This procedure may cause a delay, leading to user inconvenience.

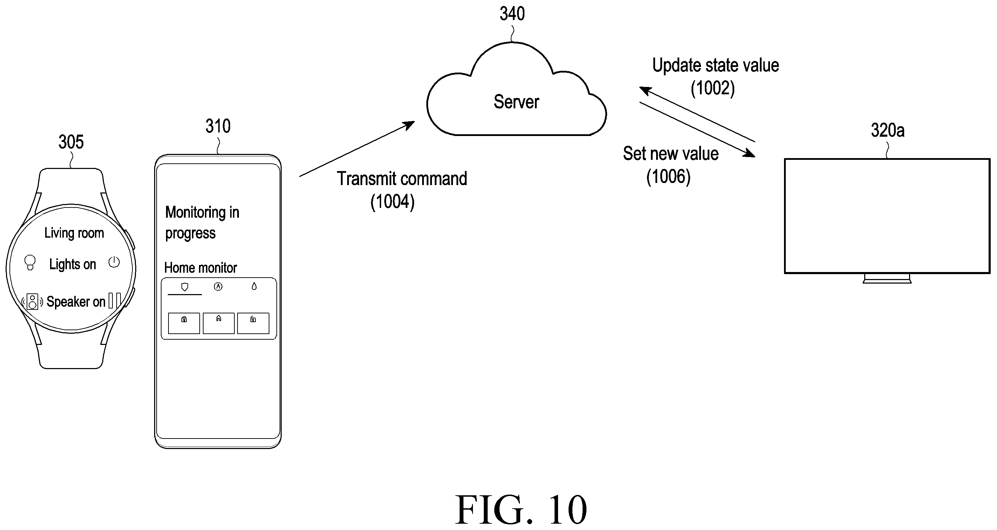

FIG. 10 is a diagram illustrating device control based on a recent current state stored in a server according to an embodiment.

Referring to FIG. 10, the first electronic device 310 and/or the second electronic device 305 may control an IoT device (e.g., the IoT device 320a) through the server 340, or directly control the IoT device 320a via a D2D connection (not shown) (e.g., a BT/BLE connection or a Wi-Fi connection). In an embodiment, the IoT device 320a may be configured to operate according to a control command based on its current state.

In operation 1002, the server 340 may collect and store state information of the IoT device 320a periodically or aperiodically. In an embodiment, the IoT device 320a may periodically transmit state information (e.g., a current channel value and/or a current volume value) indicating a current state to the server 340 according to a designated periodicity. In an embodiment, the IoT device 320a may aperiodically transmit the state information indicating the current state to the server 340 according to a designated event (e.g., power on/off, a channel change, a volume change, a state change, and/or a user operation). In an embodiment, the server 340 may periodically or aperiodically request state information from the IoT device 320a and receive the state information from the IoT device 320a.

In operation 1004, the first electronic device 310 and/or the second electronic device 305 may transmit command information related to a control command for the IoT device 320a to the server 340. In an embodiment, based on receiving a user input selecting a designated control command through a device widget or scene widget, the first electronic device 310 and/or the second electronic device 305 may transmit the command information to the server 340. The command information may indicate an action (e.g., volume up/down or channel up/down) that is intended to be executed by the IoT device 320 as instructed by the user input.

In an embodiment, the first electronic device 310 and/or the second electronic device 305 may prestore capability information related to the IoT device 320, and the capability information may include information about control commands based on the current state of the IoT device 320, among those executable by the IoT device 320. In an embodiment, for example, volume up/down or channel up/down may be classified as control commands that indicate actions based on the current state of the IoT device 320.

Based on the capability information, the first electronic device 310 and/or the second electronic device 305 may determine whether the control command selected by the user input indicates an action based on the current state of the IoT device 320. When the control command indicates an action based on the current state, the first electronic device 310 and/or the second electronic device 305 may transmit the command information indicating the control command to the server 340. Although not shown, when the control command does not indicate an action based on the current state, the first electronic device 310 and/or the second electronic device 305 may transmit the control command to the IoT device 340.

In operation 1006, the server 340 receives the command information, generates a control command corresponding to the command information based on the state information of the IoT device 320 stored in operation 1002, and then transmits the control command to the IoT device 320. In an embodiment, the control command may include a new value (e.g., new channel value 4 set based on the command information (e.g., channel up) and the state information (e.g., current channel value 3) of the IoT device 320.

Although not shown, the IoT device 320 may perform the action (e.g., setting the new value) corresponding to the control command and report an execution result (e.g., the new current channel value) to the first electronic device 310 and/or the second electronic device 305 through the server 340 or directly.

In an embodiment, the server 340 may store a mapping table (e.g., the mapping table 1410) for each registered IoT device (e.g., IoT devices 320), including at least one of the following pieces of information:
- Current on/off state of the IoT device;
- Current operational state (e.g., current temperature, current operation mode, and/or normal/abnormal state) of the IoT device;
- Control information (e.g., information indicating controllable actions) for the IoT device;
- D2D control information (e.g., support information for BT, BLE, and/or UWB, and/or previous connection information) about the IoT device; or
- Capability information indicating a control command related to the current state among supported control commands for the IoT device.

In an embodiment, at least one of the first electronic device 310 and/or the second electronic device 305, or the server 340 may store capability information that distinguishes between control commands related to the current state of the IoT device 320 and control commands not related to the current state of the IoT device 320, among control commands receivable through a device widget.

In an embodiment, the command information transmitted from the first electronic device 310 and/or the second electronic device 305 to the server 340 may include at least one of the following pieces of information:
- Increase or decrease for each action of the IoT device; or
- Capability information for mode control of the IoT device (e.g., cooling mode, wind-free mode, or sleep mode, when the IoT device is an air conditioner).

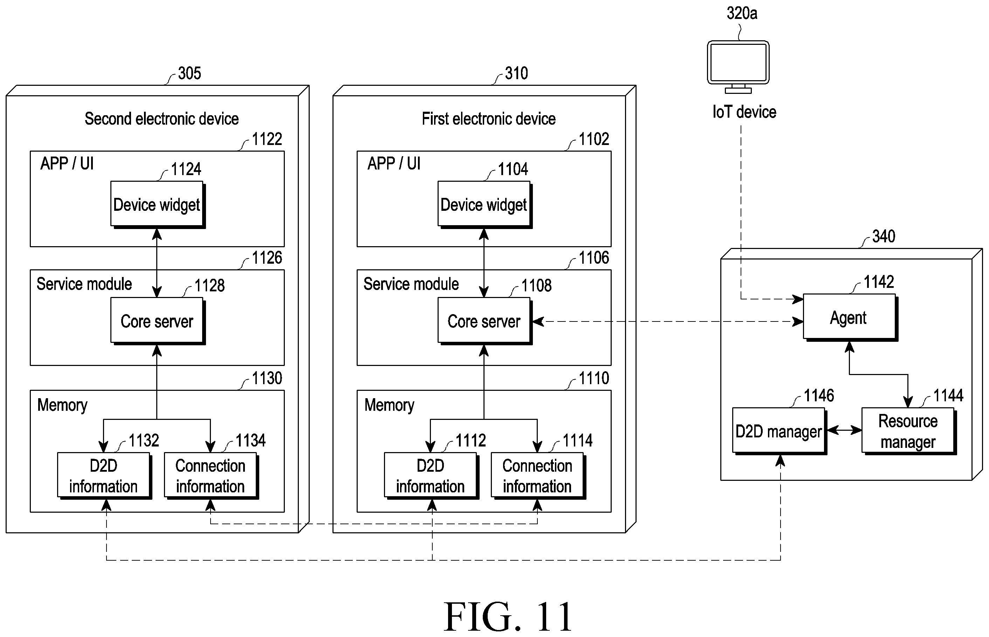

FIG. 11 is a diagram illustrating a system structure that performs control based on a current state of an IoT device according to an embodiment of the disclosure.

Referring to FIG. 11, the server 340 may include at least one of an agent module 1142, a resource manager module 1144, or a D2D manager module 1146. In an embodiment, at least one of the agent module 1142, the resource manager module 1144, or the D2D manager module 1146 may be configured in software, hardware, or a combination thereof executed by the processor 412 of FIG. 4B.

In an embodiment, the first electronic device 310 may include at least one of an application (APP)/user interface (UI) module 1102 including a device widget 1104, a service module 1106 including a core service module 1108, or memory 1110 (e.g., the memory 230 of FIG. 2) storing D2D information 1112 and connection information 1114. In an embodiment, the APP/UI module 1102 and/or the service module 1106 may be configured in software, hardware, or a combination thereof executed by the processor 220 of FIG. 2.

In an embodiment, the APP/UI module 1102 may display a widget screen (e.g., the widget screen 710 of FIG. 7) of the device widget 1104 through the display module 260 of FIG. 2. The service module 1106 may determine whether a control command corresponding to a user input received by the device widget 1104 through the widget screen is related to the current state of an IoT device (e.g., an IoT device 320), and according to the result of the determination, may transmit the control command to the IoT device 320 or to the server 340 (e.g., the agent module 1142). The service module 1106 may read the D2D information 1112 and/or the connection information 1114 stored in the memory 1110 through the core service module 1108, and determine whether a D2D connection has been established with the IoT device 320 or whether it is possible to establish a D2D connection, based on the D2D information 1112 and/or the connection information 1114.

In an embodiment, the second electronic device 305 may include at least one of an APP/UI module 1122 including a device widget 1124, a service module 1126 including a core service module 1128, or memory 1130 (e.g., the memory 406 of FIG. 4A) storing D2D information 1132 and connection information 1134. In an embodiment, the APP/UI module 1122 and/or the service module 1126 may be configured in software, hardware, or a combination thereof executed by the processor 402 of FIG. 4A.

In an embodiment, the APP/UI module 1122 may display a widget screen (e.g., the widget screen 610, 620, or 630 in FIG. 6A, 6B, or 6C) of the device widget 1124 through the display module 408 of FIG. 4A. The service module 1126 may determine whether a control command corresponding to a user input received by the device widget 1124 through the widget screen is related to the current state of the IoT device (e.g., the IoT device 320), and according to the result of the determination, may transmit the control command to the IoT device 320 or to the server 340 (e.g., the agent module 1142). The service module 1126 may read the D2D information 1132 and/or the connection information 1134 stored in the memory 1130 through the core service module 1128, and determine whether a D2D connection has been established with the IoT device 320 or whether it is possible to establish a D2D connection, based on the D2D information 1112 and/or the connection information 1114.

In an embodiment, the D2D information 1112 of the first electronic device 310 or the D2D information 1132 of the second electronic device 305 may include information indicating at least one of D2D communication technologies supported by the first electronic device 310 or the second electronic device 305, such as Bluetooth Legacy, BLE, or Wi-Fi. In an embodiment, the connection information 1114 of the first electronic device 310 or the connection information 1134 of the second electronic device 305 may include information related to the D2D connection established by the first electronic device 310 or the second electronic device 305, such as information indicating at least one of a media access control (MAC) address, a connection time, a frequency band, or a channel number of the peer device (e.g., the IoT device 320).

In an embodiment, the first electronic device 310 may transmit the D2D information 1112 and/or the connection information 1114 to the D2D manager module 1146 of the server 340. In an embodiment, the second electronic device 305 may transmit the D2D information 1132 and/or the connection information 1134 to the D2D manager module 1146 of the server 340.

In an embodiment, the server 340 (e.g., the agent module 1142) may receive command information related to a control command from the first electronic device 310 or the second electronic device 305, and identify a current state of the IoT device related to the control command in a mapping table (e.g., the mapping table 1410) managed by the resource manager module 1144. In an embodiment, the server 340 (e.g., the agent module 1142) may generate a control command including a new value according to the command information based on the identified current state and transmit the control command to the IoT device 320.

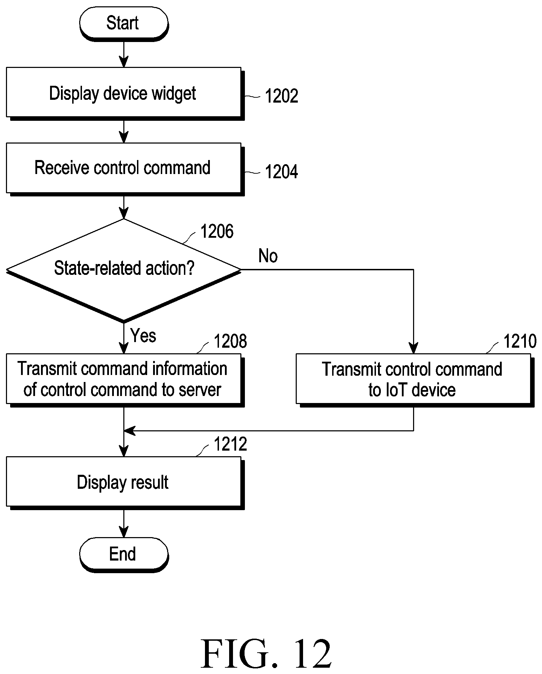

FIG. 12 is a flowchart illustrating fast device control through a device widget according to an embodiment of the disclosure. According to embodiments, at least one of the operations described below may be omitted, modified, or executed in a different order. In an embodiment, at least one of the operations described below may be performed by the processor 220 of the first electronic device 310 or the processor 402 of the second electronic device 305. While the following description is given in the context of the case where the operations are performed by the processor 402 of the second electronic device 305, it is obvious that the same or similar description may also be applied to the processor 220 of the first electronic device 310.

Referring to FIG. 12, in operation 1202, the second electronic device 305 (e.g., the processor 402) may display a widget screen (e.g., the widget screen 610 of FIG. 6A capable of executing a control command related to a designated IoT device (e.g., an IoT device 320)) of a device widget through the display module 408. In an embodiment, the second electronic device 305 (e.g., the processor 402) may display the widget screen on a home screen or a designated scene.

The widget screen may include at least one control object for controlling the IoT device 320. In an embodiment, when the IoT device 320 is a TV, the widget screen may include at least one of a power on/off object, a mute object, a volume up object, a volume down object, a channel up object, or a channel down object. In an embodiment, when the IoT device 320 is an air conditioner, the widget screen may include at least one of a power on/off object, a mode change object, a temperature up object, or a temperature down object.

In operation 1204, the second electronic device 305 (e.g., the processor 402) may receive a control command corresponding to any one of the at least one object from the user through the widget screen. In an embodiment, when the IoT device 320 is a TV, the control command may indicate any one of power on/off, mute, volume up, volume down, channel up, and channel down. In an embodiment, when the IoT device 320 is an air conditioner, the control command may include any one of power on/off, mode change, temperature up, and temperature down.

In operation 1206, the second electronic device 305 (e.g., the processor 402) may determine whether the received control command indicates an action related to the current state of the IoT device 320. In an embodiment, when the IoT device 320 is registered to the server 340 or after it is registered, the second electronic device 305 (e.g., the processor 402) may receive and store capability information related to the IoT device 320 from the IoT device 320 or the server 340. The capability information may include information about control commands related to the current state of the IoT device 320 among commands executable by the IoT device 320. In an embodiment, when the IoT device 320 is a TV, the control command related to the current state may include at least one of volume up, volume down, channel up, or channel down. In an embodiment, when the IoT device 320 is an air conditioner, the control command may include at least one of temperature up or temperature down.

When the received control command indicates an action related to the current state of the IoT device 320, the second electronic device 305 (e.g., the processor 402) may proceed to operation 1208. On the contrary, when the received control command does not indicate an action related to the current state of the IoT device 320, the second electronic device 305 (e.g., the processor 402) may proceed to operation 1210.

In operation 1208, the second electronic device 305 (e.g., the processor 402) may transmit command information related to the control command to the server 340 through the communication circuitry (e.g., the communication module 404 of FIG. 4A). The command information may indicate an action (e.g., volume up/down, channel up/down, or temperature up/down) intended to be executed by the IoT device 320 by the control command.

In operation 1210, the second electronic device 305 (e.g., the processor 402) may transmit the control command to the IoT device 320 through the communication circuitry 404. In an embodiment, the control command may indicate an action (e.g., power on/off or mode change) not based on the current state of the IoT device 320. The second electronic device 305 (e.g., the processor 402) may establish a D2D connection with the IoT device 320 through the communication circuitry 404 and transmit the control command to the IoT device 320 via the D2D connection. Although not shown, when the second electronic device 305 (e.g., the processor 402) does not have a D2D connection established with the IoT device 320, or fails to establish the D2D connection, it may proceed to operation 1208 and transmit the command information related to the control command to the server 340.

In operation 1212, the second electronic device 305 (e.g., the processor 402) may output (e.g., display) an execution result corresponding to the control command. In an embodiment, the second electronic device 305 (e.g., the processor 402) may receive the execution result from the IoT device 320 via the D2D connection or receive it from the server 340. In an embodiment, the second electronic device 305 (e.g., the processor 402) may display a toast popup including the execution result on the widget screen of the device widget.

Although not shown, the second electronic device 305 (e.g., the processor 402) may be configured to control the IoT device 320 through an execution screen of an IoT client application for controlling an IoT network (e.g., the network 300) including the IoT device 320. In an embodiment, the second electronic device 305 (e.g., the processor 402) may execute the IoT client application based on a user input and display the execution screen of the IoT client application through the display module 408, while the IoT client application is running. In an embodiment, the execution screen may include control objects of controllable IoT devices (e.g., the IoT device 320). The second electronic device 305 (e.g., the processor 402) may receive a control command for the IoT device 320 through at least one of the objects.

In an embodiment, when the second electronic device 305 (e.g., the processor 402) executes the IoT client application and/or while the IoT client application is running, it may receive state information indicating recent states of the IoT devices (e.g., the IoT device 320) controllable by the IoT client application from the server 340. In an embodiment, the second electronic device 305 (e.g., the processor 402) may transmit a signal requesting state information to the server 340 and receive the state information from the server 340 in response to the transmission of the signal. The second electronic device 305 (e.g., the processor 402) may store the state information.

In an embodiment, based on receiving a control command for the IoT device 320 through the execution screen (e.g., a control object related to the IoT device 320) of the IoT client application, the second electronic device 305 (e.g., the processor 402) may identify the state information that has been previously received and stored from the server 340 for the IoT device 320. Based on the control command indicating an action (e.g., volume up/down, channel up/down, or temperature up/down) related to the recent state of the IoT device 320, the second electronic device 305 (e.g., the processor 402) may convert the control command into control information (e.g., a new state value to be set) based on the recent state of the IoT device, using the state information. To transmit the control information to the IoT device 320, when a D2D connection is not established between the second electronic device 305 and the IoT device 320, the second electronic device 305 (e.g., the processor 402) may establish the D2D connection. The second electronic device 305 (e.g., the processor 402) may transmit the control information to the IoT device 320 via the D2D connection.

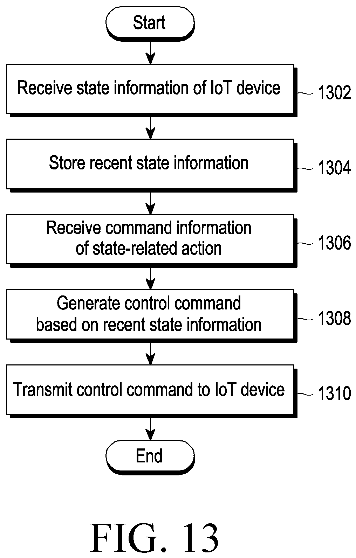

FIG. 13 is a flowchart illustrating fast device control by a server according to an embodiment of the disclosure. According to embodiments, at least one of the operations described below may be omitted, modified, or executed in a different order. In an embodiment, at least one of the operations described below may be executed by the processor 412 of the server 340.

Referring to FIG. 13, in operation 1302, the server 340 (e.g., the processor 412) may receive state information of an IoT device (e.g., an IoT device 320) through the communication circuitry 414. In an embodiment, after the IoT device 320 is registered to the server 340, the server 340 (e.g., the processor 412) may receive state information periodically from the IoT device 320 according to a designated periodicity. In an embodiment, after the IoT device 320 is registered to the server 340, the server 340 (e.g., the processor 412) may receive state information aperiodically from the IoT device 320 according to a designated event. In an embodiment, the server 340 (e.g., the processor 412) may request state information from the IoT device 320 and receive the state information from the IoT device 320 in response to the request.

In operation 1304, the server 340 (e.g., the processor 412) may store the state information in a mapping table (e.g., the mapping table 1410) of the IoT device 320. In an embodiment, the server 340 (e.g., the processor 412) may continuously update the state information in the mapping table to maintain the state information as a recent latest state value. In an embodiment, when the IoT device 320 is a TV, the state information may include at least one of power on/off, a current volume, or a current channel. In an embodiment, when the IoT device 320 is an air conditioner, the state information may include at least one of power on/off, a current operation mode, or a current temperature.

In operation 1306, the server 340 (e.g., the processor 412) may receive command information related to a control command for the IoT device 320 from the first electronic device 310 or the second electronic device 305. In an embodiment, the command information may indicate an action intended to be executed by the IoT device 320. In an embodiment, the command information may indicate an action related to the current state of the IoT device 320. In an embodiment, when the IoT device 320 is a TV, the command information may indicate any one of volume up, volume down, channel up, and channel down. In an embodiment, when the IoT device 320 is an air conditioner, the command information may indicate either temperature up or temperature down.

In operation 1308, the server 340 (e.g., the processor 412) may generate a control command corresponding to the command information based on the current state of the IoT device 320 read from the mapping table and the command information. In an embodiment, the control command may include a new state value to be set for the IoT device 320 based on the current state and the command information. In an embodiment, when the IoT device 320 is a TV, the current channel value of the IoT device 320 is 3, and the command information indicates channel up, the control command may include a new channel value of 4. In an embodiment, when the IoT device 320 is an air conditioner, the current temperature value of the IoT device 320 is 22°C, and the command information indicates temperature up, the control command may include a new temperature value of 22.5°C.

In operation 1310, the server 340 (e.g., the processor 412) may transmit the control command to the IoT device 320 through the communication circuitry 414. In an embodiment, the control command may reach the IoT device 320 over a network (e.g., the Internet). Although not shown, the server 340 (e.g., the processor 412) may receive an execution result corresponding to the control command from the IoT device 320 through the communication circuitry 414 and transmit the execution result to the first electronic device 310 and/or the second electronic device 305 through the communication circuitry 414.

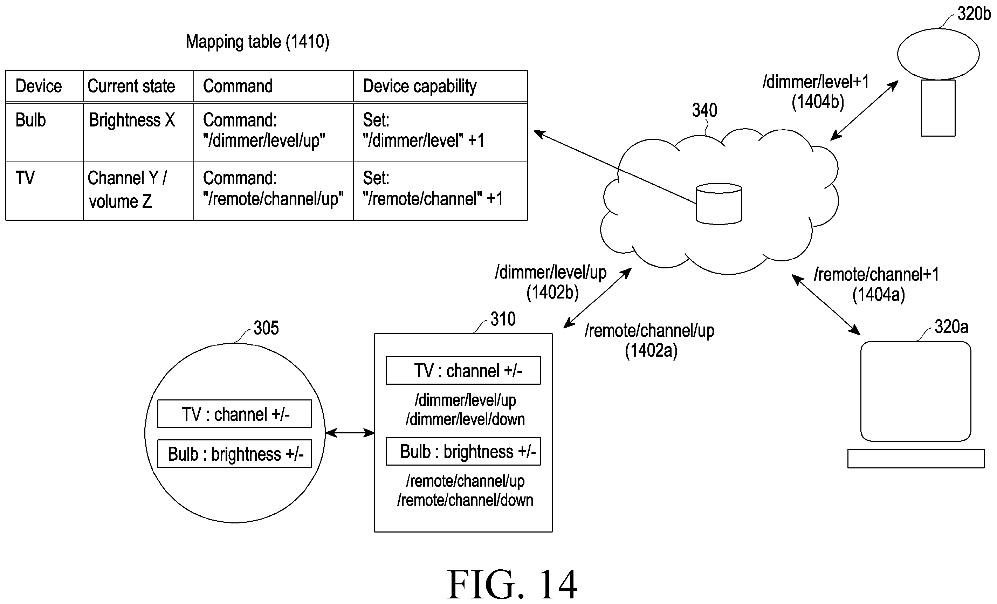

FIG. 14 is a diagram illustrating a system structure for transmitting a control command to an IoT device according to an embodiment of the disclosure.

Referring to FIG. 14, after one or more IoT devices (e.g., the IoT device 320a and the IoT device 320b) are registered to the server 340, the server 340 may store current state values of the IoT device 320a and the IoT device 320b in the mapping table 1410. In an embodiment, the mapping table 1410 may further include executable actions and/or device capabilities of the IoT device 320a and the IoT device 320b. Whenever the states of the IoT device 320a and the IoT device 320b change, the server 340 may receive state information indicating the changed states from the IoT device 320a and the IoT device 320b and keep the state information in the mapping table 1410 up-to-date.

In an embodiment, the first electronic device 310 may display a widget screen 1412a or 1412b of a device widget related to the IoT device 320a or the IoT device 320b. In an embodiment, the widget screen 1412a or 1412b of the device widget may be included on a home screen. In an embodiment, when the first electronic device 310 adds the device widget to the home screen, it may store capability information indicating control commands for actions related to the current state of the IoT device 320a or the IoT device 320b, among supported actions of the IoT device 320a or the IoT device 320b. The first electronic device 310 may support fast control of the IoT device 320a or the IoT device 320b through the widget screen 1412a or 1412b without executing an IoT client application or without the burden of receiving the updated recent state of the IoT device 320a or the IoT device 320b from the server 340.

In an embodiment, when the IoT device 320a is a TV, the widget screen 1412a of the device widget related to the IoT device 320a may include a channel up/down object. In an embodiment, when the IoT device 320b is a bulb, the widget screen 1412b of the device widget related to the IoT device 320b may include a brightness up/down object.

The first electronic device 310 may receive a user input (e.g., a touch) on the channel up object through the widget screen 1412a and identify that a channel up command corresponding to the channel up object is related to a current channel value of the IoT device 320a. Accordingly, the first electronic device 310 may transmit command information 1402a (e.g., 'remote/channel/up') indicating channel up corresponding to the channel up object to the server 340. The first electronic device 310 may receive a user input (e.g., a touch) on the brightness up object through the widget screen 1412b and identify that a brightness up command corresponding to the brightness up object is related to a current brightness value of the IoT device 320b. Accordingly, the first electronic device 310 may transmit command information 1402b (e.g., 'dimmer/level/up') indicating brightness up corresponding to the brightness up object to the server 340.

In an embodiment, the second electronic device 305 may display a widget screen 1414a or 1414b of the device widget related to the IoT device 320a or the IoT device 320b. In an embodiment, the widget screen 1414a or 1414b of the device widget may be included on a home screen. In an embodiment, when the second electronic device 305 adds the device widget to the home screen, it may store capability information indicating the control commands for actions related to the current state of the IoT device 320a or the IoT device 320b, among the supported actions of the IoT device 320a or the IoT device 320b. The second electronic device 305 may support fast control of the IoT device 320a or the IoT device 320b through the widget screen 1412a or 1412b without executing the IoT client application or without the burden of receiving the updated recent state of the IoT device 320a or the IoT device 320b from the server 340.

In an embodiment, when the IoT device 320a is a TV, the widget screen 1414a of the device widget related to the IoT device 320a may include a channel up/down object. In an embodiment, when the IoT device 320b is a bulb, the widget screen 1414b of the device widget related to the IoT device 320b may include a brightness up/down object.

The second electronic device 305 may receive a user input (e.g., a touch) on the channel up object through the widget screen 1414a and identify that the channel up command corresponding to the channel up object is related to the current channel value of the IoT device 320a. Accordingly, the second electronic device 305 may transmit the command information 1402a (e.g., 'remote/channel/up') indicating channel up corresponding to the channel up object to the server 340. The second electronic device 305 may receive a user input (e.g., a touch) on the brightness up object through the widget screen 1414b and identify that the brightness up command corresponding to the brightness up object is related to the current brightness value of the IoT device 320b. Accordingly, the second electronic device 305 may transmit the command information 1402b (e.g., 'dimmer/level/up') indicating brightness up corresponding to the brightness up object to the server 340.

The server 340 may convert the command information (e.g., the command information 1402a or 1402b) received from the first electronic device 310 or the second electronic device 305 into a control command based on the mapping table 1410. In an embodiment, based on receiving the command information 1402a related to the IoT device 320a, the server 340 may identify the current state (e.g., channel Y and/or volume Z) of the IoT device 320a in the mapping table 1410. The server 340 may convert the command information 1402a indicating channel up into a control command 1404a (e.g., '/remote/channel+1') including Y+1, based on the current state. The server 340 may transmit the control command 1404a to the IoT device 320a. After transmitting the control command 1404a, or after receiving an execution result of the control command 1404a from the IoT device 320a, the server 340 may update the current channel state of the IoT device 320a to Y+1 in the mapping table 1410.

In an embodiment, based on receiving the command information 1402b related to the IoT device 320b, the server 340 may identify the current state (e.g., brightness X) of the IoT device 320b in the mapping table 1410. The server 340 may convert the command information 1402b indicating brightness up into a control command 1404b (e.g., '/dimmer/level+1') including X+1, based on the current state. The server 340 may transmit the control command 1404b to the IoT device 320b. After transmitting the control command 1404b, or after receiving an execution result of the control command 1404b from the IoT device 320b, the server 340 may update the current brightness state of the IoT device 320b to X+1 in the mapping table 1410.

The IoT device 320a may receive the control command 1404a and execute the action of changing the channel to the new channel value (e.g., Y+1) included in the control command 1404a. The IoT device 320a may report the execution result of the action to the server 340. The IoT device 320b may receive the control command 1404b and execute the action of changing the brightness level to the new brightness value (e.g., X+1) included in the control command 1404b. The IoT device 320b may report the execution result of the action to the server 340.

In an embodiment, when the first electronic device 310 or the second electronic device 305 receives a user input for device control through a device widget, it may transmit the command information 1402a or 1402b to the server 340 without needing to query the server 340 for the current state of the corresponding IoT device 320a or 320b, and receive a result from the server 340. In an embodiment, the first electronic device 310 or the second electronic device 305 may display a UI (e.g., a toast popup) including the execution result of the device control according to the user input through the device widget.

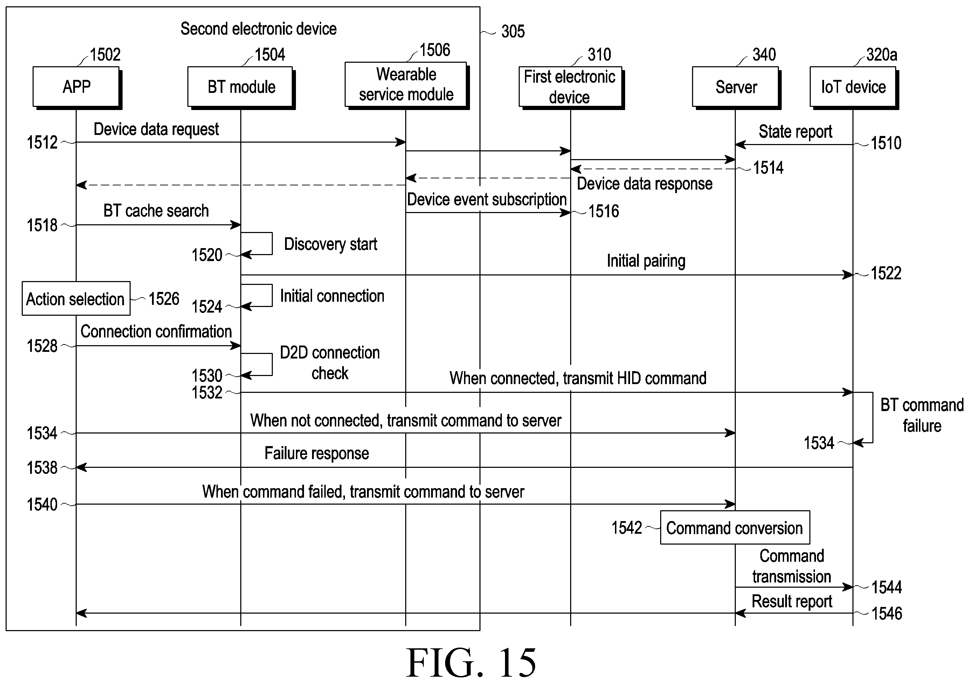

With reference to FIGS. 15, 16, 17, 18A, 18B, 18C, 18D, and 19, embodiments of performing device control through the second electronic device 305 will be described below. However, it is obvious that a similar description may also be applied to the first electronic device 310.

FIG. 15 is a sequence diagram illustrating a signal flow for device control according to an embodiment of the disclosure. According to embodiments, at least one of the operations described below may be omitted, modified, or executed in a different order. The second electronic device 305 may include at least one of an APP/UI module 1502 (e.g., the APP/UI module 1122), a BT module 1504, or a wearable service module 1506 (e.g., the service module 1126). In an embodiment, at least one of the APP/UI module 1502 or the wearable service module 1506 may be a software module executed by the processor 402 of FIG. 4A. In an embodiment, the BT module 1504 may be included in the communication circuitry 404 of FIG. 4A.

Referring to FIG. 15, in operation 1510, after the IoT device 320a is registered to the server 340, it may periodically or aperiodically transmit state information indicating the current state of the IoT device 320a to the server 340. The server 340 may store the state information along with device information (e.g., the MAC address of the IoT device 320a) in a mapping table (e.g., the mapping table 1410).

In operation 1512, the second electronic device 305 (e.g., the APP/UI module 1502) may transmit a device data request signal to the first electronic device 310 through the wearable service module 1506. In an embodiment, the device data request signal may include information requesting capability information related to a designated IoT device (e.g., the IoT device 320a). The device data request signal may be forwarded to the server 340 by the first electronic device 310.

In operation 1514, the server 340 may transmit a device data response signal including the capability information requested by the second electronic device 305 to the second electronic device 305 through the first electronic device 310, based on registration information of the IoT device 320a registered to the server 340. In an embodiment, the registration information may include device information such as the MAC address of the IoT device 320a and control commands executable by the IoT device 320a. The device data response signal may be forwarded to the APP/UI module 1502 through the wearable service module 1506 of the second electronic device 305. In operation 1516, the second electronic device 305 (e.g., the wearable service module 1506) may transmit a device event subscription signal to the first electronic device 310.

In operation 1518, the second electronic device 305 (e.g., the APP/UI module 1502) may transmit a BT cache search signal to the BT module 1504 to determine whether the IoT device 320a is already connected to the second electronic device 305. In operation 1520, when the IoT device 320a (e.g., the APP/UI module 1502) is not connected to the second electronic device 305, for example, when the IoT device 320a is not paired with the second electronic device 305, the second electronic device 305 (e.g., the BT module 1504) may initiate a discovery procedure.

In operation 1522, the second electronic device 305 (e.g., the BT module 1504) may discover the IoT device 320a and perform initial pairing with the IoT device 320a. In operation 1524, when the IoT device 320a is paired with the second electronic device 305, the second electronic device 305 (e.g., the BT module 1504) may identify that an initial connection (e.g., BT connection or BLE connection) has been established with the IoT device 320a. In an embodiment, the second electronic device 305 may store connection information (e.g., the connection information 1134) related to the initial connection with the IoT device 320a in memory (e.g., the memory 406 or the memory 1130).

In operation 1526, the second electronic device 305 (e.g., the APP/UI module 1502) may receive a user input selecting an action to be executed on the IoT device 320a (e.g., a TV). In an embodiment, the second electronic device 305 (e.g., the APP/UI module 1502) may receive the user input (e.g., touch) through a widget screen of a device widget corresponding to the IoT device 320a. In operation 1528, the second electronic device 305 (e.g., the APP/UI module 1502) may transmit a connection confirmation signal for the IoT device 320a to the BT module 1504 to execute the action.

In operation 1530, the second electronic device 305 (e.g., the BT module 1504) may identify whether a D2D connection (e.g., BT connection) is established with the IoT device 320a. In an embodiment, the second electronic device 305 (e.g., the BT module 1504) may identify whether the IoT device 320a supports a D2D connection by comparing MAC information (e.g., a MAC address) received from the server 340 with MAC information (e.g., the MAC address) of the IoT device 320a, and when the IoT device 320a supports a D2D connection, it may proceed with Bluetooth pairing to connect to the IoT device 320a. In operation 1532, the second electronic device 305 (e.g., the BT module 1504) may transmit a control command corresponding to the selected action to the IoT device 320a via the D2D connection, based on identifying that a D2D connection exists (e.g., a D2D connection is established with the IoT device 320a).

In operation 1534, when a D2D connection does not exist with the IoT device 320a or when the control command corresponding to the selected action is related to the current state of the IoT device 320a, the second electronic device 305 (e.g., the APP/UI module 1502) may transmit command information of the control command corresponding to the selected action to the server 340. In an embodiment, the command information may include information indicating the selected action (e.g., channel up/down).

In operation 1536, the IoT device 320a may fail to execute the action corresponding to the control command received in operation 1530. In an embodiment, the control command may include command information (e.g., channel up/down) not based on the current state of the IoT device 320a, and the IoT device 320a may fail to execute the action because it is not capable of interpreting the control command. In an embodiment, the IoT device 320a may fail to execute the action for other reasons. In operation 1538, the IoT device 320a may transmit a failure response indicating the failure of the action to the second electronic device 305 (e.g., the APP/UI module 1502) via the D2D connection.

In operation 1540, when receiving the failure response from the IoT device 320a, the second electronic device 305 (e.g., the APP/UI module 1502) may transmit the command information of the control command corresponding to the selected action to the server 340. In an embodiment, the command information may include information indicating the selected action (e.g., channel up/down).

In operation 1542, the server 340 may convert the command information received in operation 1534 or operation 1540 into a corresponding control command based on the current state (e.g., the state information received in operation 1510) of the IoT device 320a. In an embodiment, the control command may include a new state value reflecting the current state of the IoT device 320a. In operation 1544, the server 340 may transmit the control command to the IoT device 320a.

In operation 1546, the IoT device 320a may transmit an execution result of the control command to the second electronic device 305 (e.g., the APP/UI module 1502) through the server 340. The second electronic device 305 (e.g., the APP/UI module 1502) may display the execution result through the widget screen in the form of, for example, a toast popup.

In an embodiment, when the control command transmitted to the IoT device 320a via the D2D connection fails, or when the D2D connection with the IoT device 320a is lost, the second electronic device 305 may proceed with the D2D connection in the background for a designated time to retransmit the control command.

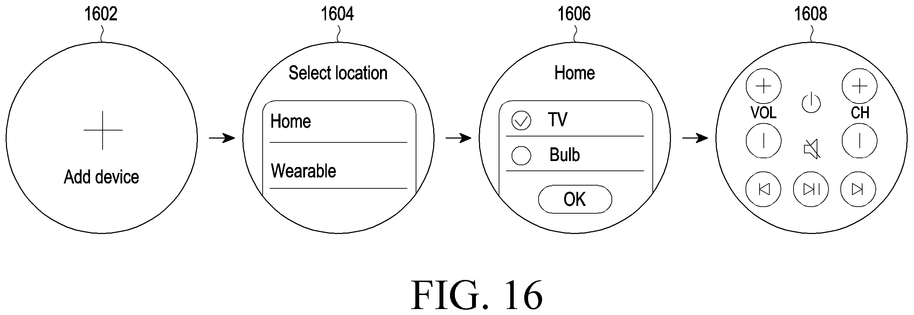

FIG. 16 is a diagram illustrating a flow for adding a device widget to a home screen according to an embodiment of the disclosure.

Referring to FIG. 16, the second electronic device 305 may display a device widget screen 1602 that includes a device addition object for adding a new device widget to the home screen. Based on receiving a user input (e.g., a touch) through the device addition object on the device widget screen 1602, the second electronic device 305 may display a location selection screen 1604. The location selection screen 1604 may include at least one location selection object for selecting a location where the device widget is to be added, either the home screen or a wearable scene.

Based on receiving a user input selecting the home screen through the at least one location selection object, the second electronic device 305 may display a device selection screen 1606 for selecting a device to be added to the home screen. The device selection screen 1606 may include at least one device selection object for selecting at least one IoT device (e.g., TV or bulb) that supports a device widget.

Based on receiving a user input selecting the TV via the device selection object, the second electronic device 305 may add a device widget corresponding to the TV to the home screen and display a widget screen 1608 of the device widget. In an embodiment, the widget screen 1608 may include at least one control object (e.g., at least one of a power on/off object, a mute object, a volume up/down object, a channel up/down object, a previous/next object, or a play/stop object) capable of controlling the TV.

Depending on whether a control command corresponding to a user input received through the widget screen 1608 is related to the current state of the TV, the second electronic device 406 may directly transmit the control command to the TV or transmit command information related to the control command to the server 340.

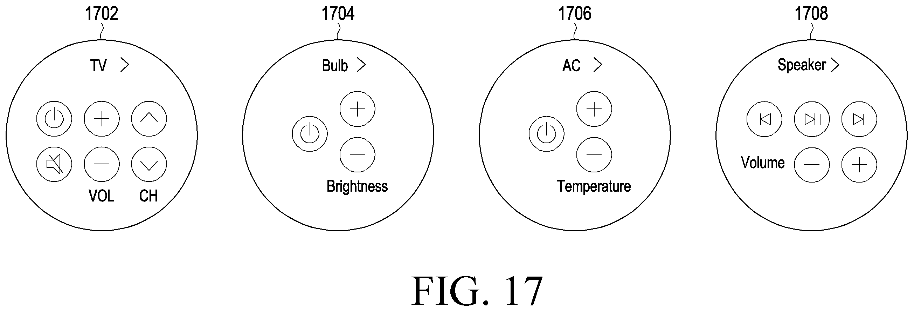

FIG. 17 illustrates examples of device widgets according to an embodiment of the disclosure.

Referring to FIG. 17, in an embodiment, a widget screen 1702 of a device widget corresponding to a TV may include an on/off object, a mute object, a volume up object, a volume down object, a channel up object, and a channel down object. In an embodiment, a widget screen 1704 of a device widget corresponding to a bulb may include an on/off object, a brightness up object, and a brightness down object. In an embodiment, a widget screen 1706 of a device widget corresponding to an air conditioner may include an on/off object, a temperature up object, and a temperature down object. In an embodiment, a widget screen 1708 of a device widget corresponding to a speaker device may include a previous object, a play/stop object, a next object, a volume up object, and a volume down object.

In an embodiment, depending on whether a control command corresponding to a user input received through at least one of the widget screens 1702, 1704, 1706, and 1708 is related to the current state of each IoT device, the second electronic device 406 may directly transmit the control command to the IoT device or transmit command information related to the control command to the server 340.

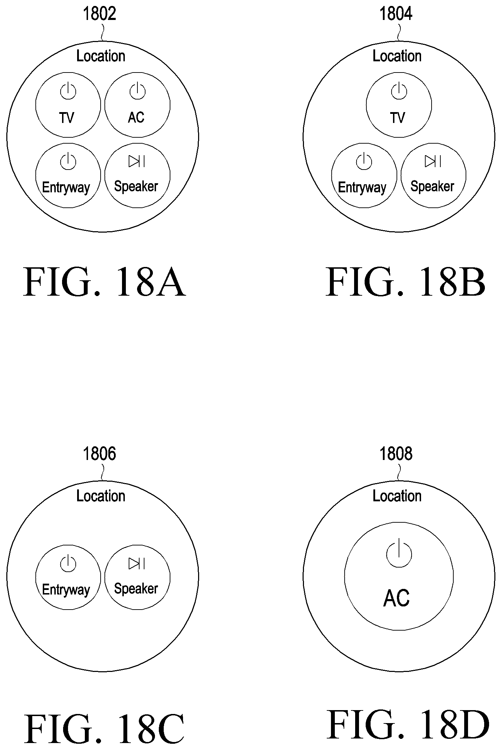

FIGS. 18A, 18B, 18C, and 18D illustrate examples of a multi-device widget according to an embodiment of the disclosure.

Referring to FIG. 18A, in an embodiment, a widget screen 1802 of a first multi-device widget may include a TV object, an air conditioner object, an entryway object, and a speaker object. Referring to FIG. 18B, in an embodiment, a widget screen 1804 of a second multi-device widget may include a TV object, an entryway object, and a speaker object. Referring to FIG. 18C, in an embodiment, a widget screen 1806 of a third multi-device widget may include an entryway object and a speaker object. Referring to FIG. 18D, in an embodiment, a widget screen 1808 of a fourth multi-device widget may include an air conditioner object.

In an embodiment, the second electronic device 406 may create at least one of the first, second, third, or fourth multi-device widgets based on a user input, and display a widget screen (e.g., at least one of the widget screens 1802, 1804, 1806, and 1808) of a designated device widget through each multi-device widget. Depending on whether a control command corresponding to a user input received through at least one of the widget screens 1802, 1804, 1806, and 1808 is related to the current state of each IoT device, the second electronic device 406 may directly transmit the control command to the IoT device or transmit command information related to the control command to the server 340.

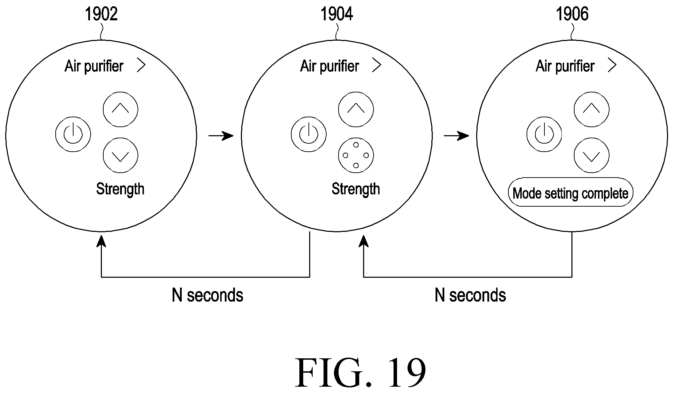

FIG. 19 is a diagram illustrating a widget UI including state information after device control according to an embodiment of the disclosure.

Referring to FIG. 19, the second electronic device 305 may display a widget screen 1902 of a device widget corresponding to a designated IoT device 320 (e.g., an air purifier). In an embodiment, the widget screen 1902 may include an on/off object, a strength up object, and a strength down object.

Based on receiving a user input (e.g., a touch) through, for example, the strength down object, the second electronic device 305 may attempt to transmit a control command to the IoT device 320 (e.g., the air purifier). For example, a strength down control command corresponding to the strength down object may be related to the current state (e.g., current strength) of the IoT device 320, and the second electronic device 305 may transmit command information corresponding to the strength down control command to the server 340. Until an execution result is received from the IoT device 320 or a designated time elapses after receiving the user input, the second electronic device 305 may display a widget screen 1904 that includes a processing object.

When receiving an execution result indicating that the strength down control command was successfully executed from the IoT device 320, the second electronic device 305 may display a widget screen 1906 that includes a toast popup 1906a (e.g., "mode setting complete") including the execution result. In an embodiment, when an execution result indicating failure to execute the strength down control command is received from the IoT device 320, or if no execution result is received until a designated time (e.g., N seconds) elapses, the second electronic device 305 may replace the widget screen 1904 including the processing object with the widget screen 1902 including control objects, and display it.

The electronic device 310 or 305 according to an embodiment of the disclosure may include the memory 230 or 406 storing instructions, the communication circuitry 290 or 404, the a display module 260 or 408, and the at least one processor 220 or 402 functionally coupled with the memory, the communication circuitry, and the display module. The instructions, when executed by the at least one processor, may cause the electronic device to, based on receiving a first control command for an IoT device 320 through a widget screen of a device widget corresponding to the IoT device, while displaying the widget screen through the display module, determine whether the first control command indicates an action associated with a current state of the IoT device. The instructions, when executed by the at least one processor, may cause the electronic device to, based on the first control command indicating the action associated with the current state of the IoT device, transmit, through the communication circuitry, command information related to the first control command to the server 340 for the server to control the IoT device. The instructions, when executed by the at least one processor, may cause the electronic device to, based on receiving a second control command for the IoT device through an execution screen of an IoT client application for controlling an IoT network including the IoT device while displaying the execution screen of the IoT client application, convert the second control command to control information associated with a recent state of the IoT device, by using state information representing the recent state of the IoT device stored by the IoT client application. The instructions, when executed by the at least one processor, may cause the electronic device to transmit the control information to the IoT device via a D2D connection established between the IoT device and the electronic device.

In an embodiment, the instructions may cause the electronic device to, based on the first control command not indicating the action associated with the current state of the IoT device, transmit the first control command to the IoT device without using the server.

In an embodiment, the instructions may cause the electronic device to establish the D2D connection with the IoT device, and transmit the first control command to the IoT device via the D2D connection.

In an embodiment, the instructions may cause the electronic device to transmit the command information related to the first control command to the server, based on failing to establish the D2D connection between the IoT device and the electronic device.

In an embodiment, the instructions may cause the electronic device to display an execution result of the first control command through the widget screen.

In an embodiment, the command information may include capability information for causing the server to control the IoT device based on the current state of the IoT device.

In an embodiment, the command information may include information instructing to change the current state of the IoT device.

In an embodiment, the instructions may cause the electronic device to, based on receiving the first control command or the second control command, determine whether D2D connection information related to the IoT device is stored, and based on the D2D connection information being stored, establish the D2D connection based on the stored D2D connection information.

In an embodiment, the instructions may cause the electronic device to receive, from the IoT device, an execution result of the first control command or the second control command, and display, through the display module, a toast pop-up including information indicating the execution result of the first control command or the second control command.

The server 340 according to an embodiment of the disclosure may include the communication circuitry 414, the memory 416 storing instructions, and the at least one processor 412 functionally coupled with the communication circuitry and the memory. The at least one processor may be configured to receive and store state information indicating a current state of an IoT device 320 in the memory. The instructions, when executed by the at least one processor, may cause the server to receive, from the electronic device 305 or 310, command information related to an action intended to be executed by the IoT device through the communication circuitry. The instructions, when executed by the at least one processor, may cause the server to convert the command information to a control command including a new state value to be set in the IoT device, based on the state information. The instructions, when executed by the at least one processor, may cause the server to transmit the control command to the IoT device through the communication circuitry.

In a non-transitory computer-readable storage medium storing at least one program according to an embodiment of the discourse, the at least one program may include instructions configured to, when executed by the at least one processor 402 or 220 of the electronic device 310 or 305, cause the electronic device to, based on receiving a first control command for an IoT device 320 through a widget screen of a device widget corresponding to the IoT device, while displaying the widget screen through a display module, determine whether the first control command indicates an action associated with a current state of the IoT device, based on the first control command indicating the action associated with the current state of the IoT device, transmit command information related to the first control command to a server 340 for the server to control the IoT device, based on receiving a second control command for the IoT device through an execution screen of an IoT client application for controlling an IoT network including the IoT device while displaying the execution screen of the IoT client application, convert the second control command to control information associated with a recent state of the IoT device, by using state information representing the recent state of the IoT device stored by the IoT client application, and transmit the control information to the IoT device via a D2D connection established between the IoT device and the electronic device.

In an embodiment, the at least one program may include instructions configured to, when executed by the at least one processor of the electronic device, cause the electronic device to, based on the first control command not indicating the action associated with the current state of the IoT device, transmit the first control command to the IoT device without using the server.

In an embodiment, the at least one program may include instructions configured to, when executed by the at least one processor of the electronic device, cause the electronic device to establish the D2D connection with the IoT device, and transmit the first control command to the IoT device via the D2D connection.

In an embodiment, the at least one program may include instructions configured to, when executed by the at least one processor of the electronic device, cause the electronic device to transmit the command information related to the first control command to the server, based on failing to establish the D2D connection between the IoT device and the electronic device.

In an embodiment, the at least one program may include instructions configured to, when executed by the at least one processor of the electronic device, cause the electronic device to display an execution result of the first control command through the widget screen.

In an embodiment, the command information may include capability information for causing the server to control the IoT device based on the current state of the IoT device.

In an embodiment, the command information may include information instructing to change the current state of the IoT device.

In an embodiment, the at least one program may include instructions configured to, when executed by the at least one processor of the electronic device, cause the electronic device to, based on receiving the first control command or the second control command, determine whether D2D connection information related to the IoT device is stored, and based on the D2D connection information being stored, establish the D2D connection based on the stored D2D connection information.

In an embodiment, the at least one program may include instructions configured to, when executed by the at least one processor of the electronic device, cause the electronic device to receive, from the IoT device, an execution result of the first control command or the second control command, and display a toast pop-up including information indicating the execution result of the first control command or the second control command.

In a non-transitory computer-readable storage medium storing at least one program according to an embodiment of the disclosure, the at least one program may include instructions configured to, when executed by the at least one processor 412 of the server 340, cause the server to receive and store state information indicating a current state of an IoT device 320, receive, from the electronic device 305 or 310, command information related to an action intended to be executed by the IoT device, convert the command information to a control command including a new state value to be set in the IoT device, based on the state information, and transmit the control command to the IoT device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 240) including one or more instructions that are stored in a storage medium (e.g., internal memory 236 or external memory 238) that is readable by a machine (e.g., the electronic device 201). For example, a processor (e.g., the processor 220) of the machine (e.g., the electronic device 201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (310; 305) comprising:
memory (230; 406) storing instructions;
communication circuitry (290; 404);
a display module (260; 408); and
at least one processor (220; 402) functionally coupled with the memory, the communication circuitry, and the display module,
wherein the instructions, when executed by the at least one processor, cause the electronic device to:
based on receiving a first control command for an internet of things (IoT) device (320) through a widget screen of a device widget corresponding to the IoT device, while displaying the widget screen through the display module, determine whether the first control command indicates an action associated with a current state of the IoT device,
based on the first control command indicating the action associated with the current state of the IoT device, transmit, through the communication circuitry, command information related to the first control command to a server (340) for the server to control the IoT device,
based on receiving a second control command for the IoT device through an execution screen of an IoT client application for controlling an IoT network including the IoT device while displaying the execution screen of the IoT client application, convert the second control command to control information associated with a recent state of the IoT device, by using state information representing the recent state of the IoT device stored by the IoT client application, and
transmit the control information to the IoT device via a D2D (device-to-device) connection established between the IoT device and the electronic device.

2. The electronic device of claim 1, wherein the instructions cause the electronic device to:
based on the first control command not indicating the action associated with the current state of the IoT device, transmit the first control command to the IoT device without using the server.

3. The electronic device of claim 2, wherein the instructions cause the electronic device to:
establish the D2D connection with the IoT device, and
transmit the first control command to the IoT device via the D2D connection.

4. The electronic device of claim 3, wherein the instructions cause the electronic device to:
transmit the command information related to the first control command to the server, based on failing to establish the D2D connection between the IoT device and the electronic device.

5. The electronic device of any one of claims 1 to 4, wherein the instructions cause the electronic device to:
display an execution result of the first control command through the widget screen.

6. The electronic device of any one of claims 1 to 5, wherein the command information includes capability information for causing the server to control the IoT device based on the current state of the IoT device.

7. The electronic device of claim 6, wherein the command information includes information instructing to change the current state of the IoT device.

8. The electronic device of any one of claims 1 to 7, wherein the instructions cause the electronic device to:
based on receiving the first control command or the second control command, determine whether D2D connection information related to the IoT device is stored, and
based on the D2D connection information being stored, establish the D2D connection based on the stored D2D connection information.

9. The electronic device of any one of claims 1 to 8, wherein the instructions cause the electronic device to:
receive, from the IoT device, an execution result of the first control command or the second control command, and
display, through the display module, a toast pop-up including information indicating the execution result of the first control command or the second control command.

10. A server (340) comprising:
communication circuitry (414);
memory (416) storing instructions; and
at least one processor (412) functionally coupled with the communication circuitry and the memory,
wherein the instructions, when executed by the at least one processor, cause the server to:
receive and store state information indicating a current state of an internet of things (IoT) device (320) in the memory,
receive, from an electronic device (305; 310), command information related to an action intended to be executed by the IoT device through the communication circuitry,
convert the command information to a control command including a new state value to be set in the IoT device, based on the state information, and
transmit the control command to the IoT device through the communication circuitry.

11. A non-transitory computer-readable storage medium storing at least one program which includes instructions configured to, when executed by at least one processor (402; 220) of an electronic device (310; 305), cause the electronic device to:
based on receiving a first control command for an internet of things (IoT) device (320) through a widget screen of a device widget corresponding to the IoT device, while displaying the widget screen through a display module, determine whether the first control command indicates an action associated with a current state of the IoT device,
based on the first control command indicating the action associated with the current state of the IoT device, transmit command information related to the first control command to a server (340) for the server to control the IoT device,
based on receiving a second control command for the IoT device through an execution screen of an IoT client application for controlling an IoT network including the IoT device while displaying the execution screen of the IoT client application, convert the second control command to control information associated with a recent state of the IoT device, by using state information representing the recent state of the IoT device stored by the IoT client application, and
transmit the control information to the IoT device via a D2D (device-to-device) connection established between the IoT device and the electronic device.

12. The non-transitory computer-readable storage medium of claim 12, wherein the at least one program includes instructions configured to, when executed by the at least one processor of the electronic device, cause the electronic device to:
based on the first control command not indicating the action associated with the current state of the IoT device, transmit the first control command to the IoT device without using the server,
establish the D2D connection with the IoT device,
transmit the first control command to the IoT device via the D2D connection,
transmit the command information related to the first control command to the server, based on failing to establish the D2D connection between the IoT device and the electronic device, and
display an execution result of the first control command through the widget screen.

13. The non-transitory computer-readable storage medium of claim 11 or 12, wherein the command information includes:
capability information for causing the server to control the IoT device based on the current state of the IoT device; and/or
information instructing to change the current state of the IoT device.

14. The non-transitory computer-readable storage medium of any one of claims 11 to 14, wherein the at least one program includes instructions configured to, when executed by the at least one processor of the electronic device, cause the electronic device to:
based on receiving the first control command or the second control command, determine whether D2D connection information related to the IoT device is stored,
based on the D2D connection information being stored, establish the D2D connection based on the stored D2D connection information,
receive, from the IoT device, an execution result of the first control command or the second control command, and
display a toast pop-up including information indicating the execution result of the first control command or the second control command.

15. A non-transitory computer-readable storage medium storing at least one program which includes instructions configured to, when executed by at least one processor (412) of a server (340), cause the server to:
receive and store state information indicating a current state of an internet of things (IoT) device (320),
receive, from an electronic device (305; 310), command information related to an action intended to be executed by the IoT device,
convert the command information to a control command including a new state value to be set in the IoT device, based on the state information, and
transmit the control command to the IoT device.
